# EUROPÄISCHE PATENTSCHRIFT

(11) **EP 3 558 853 B1**
(45) Veröffentlichungstag und Bekanntmachung des Hinweises auf die Patenterteilung: **31.01.2024**
(21) Anmeldenummer: 17825789.5
(22) Anmeldetag: 14.12.2017
(51) Int. Cl.: B65G 47/84, B65G 54/02

(54) **TRANSPORTVORRICHTUNG ZU EINEM TRANSPORT VON ZUMINDEST EINEM PRODUKT, VON ZUMINDEST EINER PRODUKTGRUPPE UND/ODER VON ZUMINDEST EINEM PRODUKTSTAPEL, INSBESONDERE ZU EINER ZUFÜHRUNG ZU EINEM VERPACKUNGSPROZESS EINER VERPACKUNGSMASCHINE**
TRANSPORTING APPARATUS FOR TRANSPORTING AT LEAST ONE PRODUCT, AT LEAST ONE PRODUCT GROUP AND/OR AT LEAST ONE PRODUCT STACK, IN PARTICULAR FOR SUPPLY TO A PACKAGING PROCESS OF A PACKAGING MACHINE
DISPOSITIF DE TRANSPORT POUR LE TRANSPORT D'AU MOINS UN PRODUIT, D'AU MOINS UN GROUPE DE PRODUITS ET/OU D'AU MOINS UNE PILE DE PRODUITS, EN PARTICULIER POUR LES TRANSFÉRER VERS UN PROCESSUS D'EMBALLAGE D'UNE MACHINE D'EMBALLAGE

(30) Priorität: 21.12.2016 DE 102016225820
(43) Veröffentlichungstag der Anmeldung: 30.10.2019
(73) Patentinhaber: Syntegon Packaging Systems AG, 8222 Beringen (CH)
(72) Erfinder: FRANK, Alexander, 8207 Schaffhausen (CH)
(74) Vertreter: Daub, Thomas
(86) Internationale Anmeldenummer: PCT/EP2017/082737
(87) Internationale Veröffentlichungsnummer: WO 2018/114555

(56) Entgegenhaltungen:
- EP-A1- 1 892 204
- EP-A1- 2 108 604
- DE-A1-102008 023 111
- DE-C1- 19 803 617
- FR-A1- 2 642 054

## Beschreibung

### Stand der Technik

Aus DE 102008023111 A1 ist bereits eine Transportvorrichtung zu einem Transport von zumindest einem Produkt, von zumindest einer Produktgruppe und/oder von zumindest einem Produktstapel, bekannt, wobei die Transportvorrichtung zumindest eine Fördereinheit, zumindest eine Führungseinheit, an welcher eine Vielzahl an Förderelementen der Fördereinheit, die voneinander unabhängig geschwindigkeits- und/oder positionsgeregelt antreibbar sind, angeordnet ist, und zumindest eine Vakuumeinheit zu einer Erzeugung eines Unterdrucks an den Förderelementen zu einem Halten von zumindest einem Produkt, von zumindest einer Produktgruppe und/oder von zumindest einem Produktstapel an den Förderelementen umfasst, wobei die Vakuumeinheit zumindest eine Unterdruckschalteinheit zu einer Schaltung einer Unterdruckerzeugung an zumindest einem der Förderelemente aufweist, wobei die Unterdruckschalteinheit an dem zumindest einen der Förderelemente angeordnet ist und zusammen mit dem zumindest einen Förderelement entlang der Führungseinheit bewegbar ist.

Ferner ist aus DE 198 03 617 C1 bereits eine Transportvorrichtung gemäß dem Oberbegriff des Anspruchs 1 zu einem Transport von zumindest einem Produkt, von zumindest einer Produktgruppe und/oder von zumindest einem Produktstapel bekannt. Diese bekannte Transportvorrichtung umfasst zumindest eine Fördereinheit und zumindest eine Führungseinheit, an welcher eine Vielzahl an Förderelementen der Fördereinheit, die voneinander unabhängig geschwindigkeits- und/oder positionsgeregelt antreibbar sind, angeordnet ist. Des Weiteren umfasst die bekannte Transportvorrichtung zumindest eine Vakuumeinheit zu einer Erzeugung eines Unterdrucks an den Förderelementen zu einem Halten von zumindest einem Produkt, von zumindest einer Produktgruppe und/oder von zumindest einem Produktstapel an den Förderelementen. Die Vakuumeinheit umfasst zumindest eine Unterdruckschalteinheit zu einer Schaltung einer Unterdruckerzeugung an zumindest einem der Förderelemente, wobei die Unterdruckschalteinheit an dem zumindest einen der Förderelemente angeordnet ist und zusammen mit dem zumindest einen Förderelement entlang der Führungseinheit bewegbar ist. Die Vakuumeinheit weist ferner ein Flachelement auf, das eine Unterdrucköffnung der Vakuumeinheit in Abhängigkeit von einer Position des zumindest einen Förderelements öffnet.

Offenbarung der Erfindung Der Erfindung betrifft eine Transportvorrichtung gemäß Anspruch 1 und ein Verfahren gemäß Anspruch 14.

Die Erfindung geht aus von einer Transportvorrichtung zu einem Transport von zumindest einem Produkt, von zumindest einer Produktgruppe und/oder von zumindest einem Produktstapel, insbesondere zu einer Zuführung zu einem Verpackungsprozess einer Verpackungsmaschine, mit zumindest einer Fördereinheit, mit zumindest einer, insbesondere als geschlossenen Schleife ausgebildeten, Führungseinheit, an welcher eine Vielzahl an Förderelementen der Fördereinheit, die voneinander unabhängig geschwindigkeits- und/oder positionsgeregelt antreibbar sind, angeordnet ist, und mit zumindest einer Vakuumeinheit zu einer Erzeugung eines Unterdrucks an den Förderelementen zu einem Halten von zumindest einem Produkt, von zumindest einer Produktgruppe und/oder von zumindest einem Produktstapel an den Förderelementen, die zumindest eine Unterdruckschalteinheit zu einer Schaltung einer Unterdruckerzeugung an zumindest einem der Förderelemente aufweist, wobei die Unterdruckschalteinheit an dem zumindest einen der Förderelemente angeordnet ist und zusammen mit dem zumindest einen Förderelement entlang der Führungseinheit bewegbar ist, wobei die Vakuumeinheit zumindest ein Flachelement, insbesondere ein flexibles Umschlingungselement, aufweist, das zumindest zu einem zumindest teilweisen Öffnen von zumindest einer Unterdrucköffnung der Vakuumeinheit in Abhängigkeit von einer Position des zumindest einen Förderelements, insbesondere relativ zur Führungseinheit, mit der Unterdruckschalteinheit zusammenwirkt.

Es wird vorgeschlagen, dass das Flachelement die Führungseinheit in einem Bereich der Führungseinheit, in dem die zumindest eine Unterdrucköffnung an der Führungseinheit angeordnet ist, zumindest teilweise umschlingt. Unter einem "Flachelement" soll insbesondere ein Element verstanden werden, dass entlang zumindest einer Richtung eine maximale Längserstreckung aufweist, die vorzugsweise um ein Vielfaches größer ist als eine maximale Quererstreckung des Elements. Bevorzugt verläuft die maximale Längserstreckung des Flachelements zumindest im Wesentlichen senkrecht zur maximalen Quererstreckung des Flachelements. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Bevorzugt ist die maximale Längserstreckung des Flachelements als maximale Länge ausgebildet. Vorzugsweise ist die maximale Quererstreckung des Flachelements als maximale Breite oder als maximale Stärke des Flachelements ausgebildet. Vorteilhafterweise ist das Flachelement als Band, insbesondere als flexibles Umschlingungselement, ausgebildet. Es ist jedoch auch denkbar, dass das Flachelement als Blech, insbesondere als Blechstreifen, als Riemen, als Zahnriemen oder als ein
anderes, einem Fachmann als sinnvoll erscheinendes Flachelement ausgebildet ist. Bevorzugt weist das Flachelement entlang einer Transportrichtung der Fördereinheit und/oder der Führungseinheit eine maximale Längserstreckung auf, insbesondere in einem an der Fördereinheit und/oder der Führungseinheit angeordneten Zustand des Flachelements. Vorteilhafterweise umschlingt das Flachelement, insbesondere das Umschlingungselement, die Führungseinheit zumindest zu einem Großteil, insbesondere vollständig. Bevorzugt umschlingt das Flachelement, insbesondere das Umschlingungselement, die Führungseinheit zum Großteil, insbesondere vollständig, entlang der Transportrichtung. Es ist jedoch auch denkbar, dass das Flachelement lediglich in einem Teilbereich der Führungseinheit angeordnet ist, insbesondere in einem Teilbereich, in dem zumindest eine Unterdrucköffnung der Vakuumeinheit angeordnet ist. Das Flachelement ist bevorzugt dazu vorgesehen, die zumindest eine Unterdrucköffnung zu überdecken, insbesondere in einem geschlossenen Zustand der zumindest einen Unterdrucköffnung. Unter einer "Transportrichtung" soll insbesondere eine Richtung verstanden werden, entlang derer die Vielzahl an Förderelementen in einem an der Führungseinheit angeordneten Zustand bewegbar sind, insbesondere zu einem Transport von zumindest einem Produkt, von zumindest einer Produktgruppe und/oder von zumindest einem Produktstapel. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Die zumindest eine Unterdrucköffnung ist an einer zumindest im Wesentlichen parallel zu einer Führungsbahn der Führungseinheit verlaufenden Seite, insbesondere an einer Außenseite, der Führungseinheit angeordnet. Die zumindest eine Unterdrucköffnung ist dazu vorgesehen, fluidtechnisch in Abhängigkeit von einer Position des zumindest einen Förderelements, insbesondere der Vielzahl an Förderelementen, mit dem zumindest einen Förderelement, insbesondere mit der Vielzahl an Förderelementen, zusammenzuwirken, insbesondere zu einer Erzeugung eines Unterdrucks an dem zumindest einen Förderelement, insbesondere an der Vielzahl an Förderelementen, um ein Halten von zumindest einem Produkt, von zumindest einer Produktgruppe und/oder von zumindest einem Produktstapel an dem zumindest einen Förderelement, insbesondere an der Vielzahl an Förderelementen, zu realisieren.

Die Vakuumeinheit umfasst vorzugsweise zumindest einen Unterdruckerzeuger, wie beispielsweise ein Vakuumgebläse o. dgl. Bevorzugt ist der Unterdruckerzeuger mittels einer zentralen Vakuumkammer mit der zumindest einen Unterdrucköffnung verbunden Es ist jedoch auch denkbar, dass der Unterdruckerzeuger mittels zumindest einer Vakuumleitung mit der zumindest einen Unterdrucköffnung verbunden ist oder mittels einer Vielzahl an einzelnen Vakuumleitungen mit jeweils einer Unterdrucköffnung aus einer Vielzahl von Unterdrucköffnungen verbunden ist. Vorzugsweise weist der Unterdruckerzeuger eine, einem Fachmann bereits bekannte Ausgestaltung auf. Die Vakuumeinheit weist bevorzugt eine Vielzahl an Unterdruckschalteinheiten auf, wobei bevorzugt an jedem der Förderelemente zumindest eine Unterdruckschalteinheit der Vakuumeinheit zu einer Schaltung einer Unterdruckerzeugung an dem jeweiligen Förderelement in Abhängigkeit von einer Position des einzelnen Förderelements relativ zur Führungseinheit angeordnet ist. Vorzugsweise sind die an den einzelnen Förderelementen angeordneten Unterdruckschalteinheiten dazu vorgesehen, die jeweils dem einzelnen Förderelement zugeordnete Unterdrucköffnung oder zugeordneten Unterdrucköffnungen in Abhängigkeit von einer Position des einzelnen Förderelements relativ zur Führungseinheit zu öffnen oder zu schließen. Es ist zusätzlich auch denkbar, dass die Fördereinheit zusätzlich zu der Vielzahl an Förderelementen zumindest ein Hilfsförderelement aufweist, das entkoppelt von einer Unterdruckschalteinheit ausgebildet ist. Das Hilfsförderelement kann beispielsweise als Hubelement mit einer Hubeinrichtung o. dgl. ausgebildet sein, das insbesondere mittels eines der Förderelemente entlang der Führungseinheit, insbesondere entlang der Führungsbahn, bewegbar ist und/oder das beispielsweise mittels eines Zusammenwirkens mit dem Förderelement eine Hubfunktion ermöglicht, insbesondere durch eine Relativbewegung zwischen dem Förderelement und dem Hilfsförderelement, wobei mittels einer scherenartigen Hubvorrichtung, die teilweise am Förderelement und teilweise am Hilfsförderelement angeordnet ist, eine Hubfunktion realisiert werden kann. Andere Ausgestaltungen und/oder Nutzungen des Hilfsförderelements sind ebenfalls denkbar.

Unter einem "Produkt" soll in diesem Zusammenhang ein zu verpackender Gegenstand, insbesondere ein unverpackter Gegenstand, oder eine Packung, die zumindest einen Gegenstand enthält oder leer ist, verstanden werden, wie beispielsweise ein Karton, ein Behälter, ein Tray, ein Biskuit, ein Schokoriegel, eine Folienverpackung, wie beispielsweise ein Schlauchbeutel, o. dgl. Die Zufuhrvorrichtung kann bevorzugt dazu vorgesehen sein, Gegenstände und/oder Trays und/oder Folienpackungen, die Gegenstände enthalten, und/oder Stapel von Gegenständen und/oder Trays und/oder Folienpackungen in einen Verpackungsprozess einer Verpackungsmaschine einzubringen. Unter einem "Produktstapel" soll in diesem Zusammenhang insbesondere ein vertikaler oder bevorzugt horizontaler Stapel, der von mehreren Produkten, wie Gegenständen und/oder Packungen, gebildet wird, verstanden werden, beispielsweise zusammengeschnürte gestapelte Kartonagen, gestapelte Einzelprodukte o. dgl. Es ist weiter möglich, dass ein Produktstapel mehrere Stapel von Produkten enthält, insbesondere kann ein horizontaler Produktstapel von mehreren vertikalen Stapeln von Produkten gebildet sein. Das zumindest eine Produkt, die zumindest eine Produktgruppe und/oder der zumindest eine Produktstapel sind vorzugsweise mittels zumindest eines der Förderelemente zumindest teilweise entlang der Führungseinheit bewegbar.

Die Führungseinheit ist bevorzugt als geschlossene Schleife ausgebildet. Vorzugswiese bildet die Führungseinheit eine endlose Führungsbahn für die Vielzahl an der Führungseinheit angeordneten Förderelemente. Die Vielzahl an Förderelementen ist vorzugsweise umlaufend entlang der Führungsbahn bewegbar. Die Führungsbahn kann einen ovalen, einen runden, einen elliptischen oder einen anderen, einem Fachmann als sinnvoll erscheinenden und in sich geschlossenen Verlauf aufweisen. Es ist jedoch auch denkbar, dass die Führungseinheit eine andere, einem Fachmann als sinnvoll erscheinende Ausgestaltung aufweist, wie beispielsweise eine Ausgestaltung mit einem endlichen Verlauf der Führungsbahn, der beispielsweise gerade, mäanderartiger, gebogen o. dgl. ausgebildet sein kann. Bei einem endlichen Verlauf der Führungsbahn ist zumindest ein an der Führungseinheit angeordnetes Förderelement der Fördereinheit beispielsweise von einem Ende der Führungsbahn zu einem weiteren Ende der Führungsbahn bewegbar, insbesondere hin- und hergehend bewegbar. Die Fördereinheit ist bevorzugt derart ausgebildet, dass eine Bewegung der Vielzahl an Förderelementen mittels einer magnetischen, insbesondere elektromagnetischen, Antriebseinheit der Transportvorrichtung erfolgt.

Die Transportvorrichtung umfasst vorzugsweise zumindest eine elektromagnetische Antriebseinheit zu einer Bewegung zumindest eines Förderelements, insbesondere der Vielzahl an Förderelementen, der Fördereinheit. Es ist jedoch auch denkbar, dass die Vielzahl an Förderelementen mittels einer anders ausgebildeten Antriebseinheit bewegbar sind, wie beispielsweise mittels einer Luftpolsterantriebseinheit o. dgl. Vorteilhaft ist die Antriebseinheit als ein Linearmotorsystem ausgebildet. Bevorzugt umfasst das Linearmotorsystem zumindest entlang der Führungsbahn der Führungseinheit einen Stator und eine Vielzahl unabhängig antreibbarer Translatoren, die dazu vorgesehen sind, die Förderelemente unabhängig voneinander anzutreiben. Unter einem "Linearmotorsystem" soll in diesem Zusammenhang ein System verstanden werden, welches zumindest einen Stator und eine Vielzahl entlang des Stators antreibbarer beweglicher Translatoren aufweist. Der Stator kann sich entlang einer Geraden, aber auch entlang einer Kurve und/oder einer Kreisbahn erstrecken. Bevorzugt folgt der Stator der Führungsbahn der Führungseinheit. Der Stator kann als Sekundärteil, bevorzugt als Primärteil, des Linearmotorsystems ausgebildet sein. Bevorzugt weist der Stator zumindest abschnittsweise unabhängig ansteuerbare Statorwicklungen auf. Ein magnetisches Wanderfeld kann für jeden im Einflussbereich des Stators befindlichen Translator unabhängig erzeugt werden. Die Translatoren können unabhängig angetrieben werden. Die Translatoren können als Primärteile, bevorzugt als Sekundärteile, des Linearmotorsystems ausgebildet sein. Bevorzugt weisen die Translatoren Permanentmagnete auf. Die Translatoren können passiv ausgebildet sein. Bewegte Leitungen zur Stromführung zu den Translatoren können entfallen. Bevorzugt weist das Linearmotorsystem Weg- und/oder Positionsmessmittel auf, die dazu vorgesehen sind, die Positionen und/oder Geschwindigkeiten der Translatoren relativ zum Stator zu messen. Bevorzugt ist eine Steuereinheit dazu vorgesehen, Position und/oder Geschwindigkeit der Translatoren zu steuern und/oder zu regeln. Solche Linearmotorsysteme mit unabhängig antreibbaren Translatoren sind dem Fachmann bekannt. Insbesondere sind zumindest zwei Translatoren an zumindest einem Förderelement angeordnet. Vorzugsweise weist das zumindest eine Förderelement im Bereich der Translatoren zumindest ein Dichtelement auf, das dazu vorgesehen ist, einen Spalt zwischen den Translatoren und der Führungsbahn abzudichten. Das Dichtelement ist vorzugsweise als Gleitdichtung ausgebildet. Es ist jedoch auch denkbar, dass alternativ oder zusätzlich ein Dichtelement zwischen der Führungseinheit und dem Förderelement angeordnet ist, insbesondere bei einer Ausgestaltung der Fördereinheit mit getrennt von den Förderelementen angeordneten Translatoren.

Bevorzugt ist jeweils ein Translator zum Antrieb eines Förderelements vorgesehen. Eine Vielzahl von Translatoren kann entlang des Stators unabhängig antreibbar sein. Mechanische und/oder elektrische bewegte Mittel, wie insbesondere Kabel und/oder Antriebsriemen oder Antriebsketten, zum Antrieb der Translatoren können entfallen. Entlang einer Strecke können mehrere Statoren, bevorzugt senkrecht zur Transportrichtung nebeneinander, angeordnet sein. Die Statoren können jeweils dazu vorgesehen sein, eine Teilmenge der Translatoren der Strecke anzutreiben. Bevorzugt können die Translatoren entlang der Transportrichtung abwechselnd einem der Statoren zugeordnet sein. Ein einzuhaltender Mindestabstand der Translatoren in Transportrichtung kann reduziert sein. Insbesondere können die Translatoren senkrecht zur Transportrichtung nebeneinander angeordnet sein, so dass sich die Translatoren in Transportrichtung überlappen können. Es ist auch denkbar, dass zwei getrennte Fördereinheiten senkrecht zur Transportrichtung nebeneinander angeordnet sind, wobei die Förderelemente in Transportrichtung abwechselnd einem der Fördereinheiten zugeordnet sind. Ferner ist auch denkbar, dass die Translatoren übereinander angeordnet sind oder die Translatoren getrennt von den Förderelementen ausgebildet sind und/oder in einer parallel zur Führungsbahn angeordneten Antriebsbahn angeordnet sind, um die Förderelemente anzutreiben. In einer alternativen Ausgestaltung können mehrere Translatoren, insbesondere zwei, zum Antrieb eines Förderelements vorgesehen sein. Insbesondere kann das Förderelement mehrteilig ausgebildet sein und die an einem Förderelement angeordneten Translatoren können unterschiedliche Teile des Förderelements antreiben. Die Translatoren können eine Relativbewegung von Teilen des Förderelements zueinander antreiben. Insbesondere kann die Relativbewegung dazu genutzt werden, weitere, von der Transportrichtung abweichende Bewegungen des Förderelements anzutreiben. Die Translatoren können unabhängig von den Förderelementen an Führungsmitteln gelagert sein. Eine Bahn, entlang deren die Translatoren bewegt werden, kann von der Führungsbahn, entlang deren die Förderelemente bewegt werden, abweichen. Bewegungsübertragungsmittel können dazu vorgesehen sein, zumindest eine Bewegungskomponente der Translatoren auf die Förderelemente zu übertragen. Bevorzugt können die Translatoren an den Förderelementen gelagert sein. Führungsmittel zur Lagerung der Translatoren können entfallen. Bevorzugt können von Permanentmagneten gebildete Translatoren fest mit den Förderelementen verbunden sein. Vorzugsweise sind zumindest zwei Permanentmagnete an einem Förderelement angeordnet. Es ist jedoch auch denkbar, dass eine von zwei abweichende Anzahl an Permanentmagnete an einem einzelnen Förderelement angeordnet ist.

Mittels der erfindungsgemäßen Ausgestaltung kann vorteilhaft eine positionsvariable Unterdruckerzeugung realisiert werden. Es kann vorteilhaft eine teilungsflexible Schaltung einer Unterdruckerzeugung infolge einer Positionierung des zumindest einen Förderelements erreicht werden. Es kann eine konstruktiv einfache Ansteuerung einer Unterdruckerzeugung realisiert werden. Es kann vorteilhaft eine zuverlässige Abdichtung der zumindest einen Unterdrucköffnung erfolgen. Es kann vorteilhaft sichergestellt werden, dass eine Unterdrucköffnung bei einer Positionierung des zumindest einen Förderelements im Bereich der Unterdrucköffnung zuverlässig zumindest teilweise öffenbar ist, um eine besonders vorteilhafte Unterdruckerzeugung zum Halten von zumindest einem Produkt, von zumindest einer Produktgruppe und/oder von zumindest einem Produktstapel an dem zumindest einem Förderelement zu realisieren. Es kann vorteilhaft eine flexible Anpassung der Vakuumeinheit an unterschiedlichste Geometrien der Führungseinheit erreicht werden.

Des Weiteren wird vorgeschlagen, dass die Unterdruckschalteinheit zumindest ein, insbesondere elektronisch ansteuerbares, Ventilelement aufweist, das zu einem Öffnen und/oder Schließen einer an dem zumindest einen Förderelement angeordneten Versorgungsöffnung der Vakuumeinheit vorgesehen ist.

Das Ventilelement ist bevorzugt als elektronisch ansteuerbares Ventilelement ausgebildet. Es ist jedoch auch denkbar, dass das Ventilelement als mechanisch ansteuerbares Ventilelement ausgebildet ist. Die Versorgungsöffnung ist vorzugsweise an einem Vakuumreservoir der Vakuumeinheit angeordnet, das an, insbesondere in, dem Förderelement angeordnet ist. Es kann vorteilhaft infolge eines Verschließens der Versorgungsöffnung, insbesondere nach einer Erzeugung eines Vakuums im Vakuumreservoir, ein Halten von zumindest einem Produkt, von zumindest einer Produktgruppe und/oder von zumindest einem Produktstapel an dem zumindest einem Förderelement realisiert werden, das vorzugsweise unabhängig von einer stetigen Vakuumerzeugung, insbesondere von einer dauerhaften Verbindung zwischen der Unterdrucköffnung und der Versorgungsöffnung, ist. Mittels der erfindungsgemäßen Ausgestaltung kann vorteilhaft eine variable Ansteuerung einer Unterdruckerzeugung an dem zumindest einen Förderelement erreicht werden. Es kann vorteilhaft eine besonders flexible Erzeugung eines Unterdrucks zum Halten von zumindest einem Produkt, von zumindest einer Produktgruppe und/oder von zumindest einem Produktstapel an dem zumindest einen Förderelement realisiert werden. Es kann vorteilhaft eine positionsvariable Unterdruckerzeugung realisiert werden. Es kann vorteilhaft eine teilungsflexible Schaltung einer Unterdruckerzeugung infolge einer Positionierung des zumindest einen Förderelements erreicht werden. Es kann eine konstruktiv einfache Ansteuerung einer Unterdruckerzeugung realisiert werden.

Ferner wird vorgeschlagen, dass die Unterdruckschalteinheit zumindest ein Öffnungselement aufweist, das zumindest teilweise von dem Flachelement umschlungen wird und dazu vorgesehen ist, das Flachelement in Abhängigkeit von einer Position des zumindest einen Förderelements zumindest teilweise von der zumindest einen Unterdrucköffnung abzuheben. Insbesondere wird das Öffnungselement zumindest entlang eines Winkelbereichs von mehr als 10°, bevorzugt von mehr als 30°, besonders bevorzugt von mehr als 60° und ganz besonders bevorzugt von mehr als 75° von dem Flachelement umschlungen. Es ist auch denkbar, dass das Öffnungselement entlang eines Winkelbereichs von mehr als 180° von dem Flachelement umschlungen wird. Vorzugsweise ist ein Umschlingungswinkelbereich des Flachelements auf einer der zumindest einen Unterdrucköffnung abgewandten Seite an dem Öffnungselement angeordnet. Vorzugsweise ist das Öffnungselement derart ausgebildet, dass das zumindest eine Flachelement infolge einer Bewegung des zumindest einen Förderelements entlang der Transportrichtung zumindest teilweise von der zumindest einen Unterdrucköffnung abgehoben wird. Mittels der erfindungsgemäßen Ausgestaltung kann vorteilhaft eine teilungsflexible Schaltung einer Unterdruckerzeugung infolge einer Positionierung des zumindest einen Förderelements erreicht werden. Es kann eine konstruktiv einfache Ansteuerung einer Unterdruckerzeugung realisiert werden. Es kann vorteilhaft sichergestellt werden, dass eine Unterdrucköffnung bei einer Positionierung des zumindest einen Förderelements im Bereich der Unterdrucköffnung zuverlässig zumindest teilweise öffenbar ist, um eine besonders vorteilhafte Unterdruckerzeugung zum Halten von zumindest einem Produkt, von zumindest einer Produktgruppe und/oder von zumindest einem Produktstapel an dem zumindest einem Förderelement zu realisieren.

Zudem wird vorgeschlagen, dass das Öffnungselement als Wälzelement, insbesondere als Rolle oder als Walze, ausgebildet ist. Das Öffnungselement ist bevorzugt beweglich, insbesondere drehbar, an dem zumindest einen Förderelement gelagert. Eine Bewegungsachse, insbesondere eine Drehachse, des Öffnungselements verläuft bevorzugt quer, insbesondere zumindest im Wesentlichen senkrecht, zur Transportrichtung. Bevorzugt verläuft die Bewegungsachse, insbesondere die Drehachse, des Öffnungselements zumindest im Wesentlichen parallel zu einer Haupterstreckungsebene des Flachelements und/oder zu einer Außenfläche des Flachelements. Die Außenfläche des Flachelements ist insbesondere in einem an der Führungseinheit angeordneten Zustand des Flachelements auf einer der zumindest einen Unterdrucköffnung abgewandten Seite des Flachelements angeordnet. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Mittels der erfindungsgemäßen Ausgestaltung kann vorteilhaft eine bauteilschonende Betätigung des Flachelements zu einer zumindest teilweisen Öffnung der zumindest einen Unterdrucköffnung erreicht werden. Es kann vorteilhaft eine positionsvariable Unterdruckerzeugung realisiert werden. Es kann vorteilhaft eine teilungsflexible Schaltung einer Unterdruckerzeugung infolge einer Positionierung des zumindest einen Förderelements erreicht werden. Es kann vorteilhaft sichergestellt werden, dass eine Unterdrucköffnung bei einer Positionierung des zumindest einen Förderelements im Bereich der Unterdrucköffnung zuverlässig zumindest teilweise öffenbar ist, um eine besonders vorteilhafte Unterdruckerzeugung zum Halten von zumindest einem Produkt, von zumindest einer Produktgruppe und/oder von zumindest einem Produktstapel an dem zumindest einem Förderelement zu realisieren.

Des Weiteren wird vorgeschlagen, dass das Öffnungselement bombiert ausgebildet ist. Vorzugsweise weist das Öffnungselement ausgehend von einem Randbereich des Öffnungselements in einem mittleren Bereich des Öffnungselements eine größere quer zur Bewegungsachse verlaufende maximale Erstreckung auf als im Vergleich zum Randbereich. Mittels der erfindungsgemäßen Ausgestaltung kann vorteilhaft eine Stabilisierung des Flachelements an der Führungseinheit erreicht werden. Es kann vorteilhaft einem so genannten Wandern des Flachelements auf der Führungsbahn der Führungseinheit entgegengewirkt werden, insbesondere einem Wandern entlang einer quer zur Transportrichtung verlaufenden Richtung.

Ferner wird vorgeschlagen, dass die Unterdruckschalteinheit zumindest ein Andrückelement aufweist, das dazu vorgesehen ist, das Flachelement zumindest in einem Randbereich des zumindest einen Förderelements an die Vakuumeinheit anzudrücken, insbesondere zu einer Realisierung einer Dichtungsfunktion. Bevorzugt ist das Andrückelement an dem zumindest einen Förderelement beweglich, insbesondere drehbar, gelagert. Vorzugsweise verläuft eine Bewegungsachse, insbesondere eine Drehachse, des Andrückelements zumindest im Wesentlichen parallel zur Bewegungsachse des Öffnungselements. Bevorzugt verläuft die Bewegungsachse, insbesondere die Drehachse, des Andrückelements quer, insbesondere zumindest im Wesentlichen senkrecht, zur Transportrichtung. Bevorzugt verläuft die Bewegungsachse, insbesondere die Drehachse, des Andrückelements zumindest im Wesentlichen parallel zur Haupterstreckungsebene des Flachelements und/oder zur Außenfläche des Flachelements. Mittels der erfindungsgemäßen Ausgestaltung kann vorteilhaft eine zuverlässige Abdichtungsfunktion realisiert werden. Es kann vorteilhaft eine positionsvariable Unterdruckerzeugung realisiert werden. Es kann eine konstruktiv einfache und zuverlässige Ansteuerung einer Unterdruckerzeugung realisiert werden. Es kann vorteilhaft sichergestellt werden, dass in einem Randbereich des zumindest einen Förderelements das Flachelement vorteilhaft an die Führungseinheit andrückbar ist, um Unterdrucköffnungen der Vakuumeinheit zu verschließen.

Zudem wird vorgeschlagen, dass das Andrückelement als Wälzelement, insbesondere als Rolle oder als Walze, ausgebildet ist, das auf dem Flachelement wälzt. Vorzugsweise wälzt das Andrückelement infolge einer Bewegung des Förderelements entlang der Transportrichtung auf dem Flachelement. Insbesondere ist das Flachelement infolge eines Wälzens des Andrückelements auf dem Flachelement an die Führungseinheit andrückbar, insbesondere um Unterdrucköffnungen zu verschließen. Mittels der erfindungsgemäßen Ausgestaltung kann vorteilhaft eine bauteilschonende Betätigung des Flachelements zu einem Verschließen von Unterdrucköffnungen der Vakuumeinheit realisiert werden. Es kann vorteilhaft eine zuverlässige Abdichtungsfunktion realisiert werden. Es kann vorteilhaft sichergestellt werden, dass in einem Randbereich des zumindest einen Förderelements das Flachelement vorteilhaft an die Führungseinheit andrückbar ist, um Unterdrucköffnungen der Vakuumeinheit zu verschließen.

Des Weiteren wird vorgeschlagen, dass das Andrückelement auf einer der zumindest einen Unterdrucköffnung der Vakuumeinheit abgewandten Seite des Flachelements angeordnet ist. Bevorzugt wälzt das Andrückelement auf der Außenseite des Flachelements. Bevorzugt umfasst die Unterdruckschalteinheit zumindest zwei Andrückelemente, wobei das Öffnungselement zwischen den Andrückelementen angeordnet ist, insbesondere entlang der Transportrichtung betrachtet. Mittels der erfindungsgemäßen Ausgestaltung kann vorteilhaft eine bauteilschonende Betätigung des Flachelements zu einem Verschließen von Unterdrucköffnungen der Vakuumeinheit realisiert werden. Es kann vorteilhaft eine zuverlässige Abdichtungsfunktion realisiert werden. Es kann vorteilhaft sichergestellt werden, dass in einem Randbereich des zumindest einen Förderelements das Flachelement vorteilhaft an die Führungseinheit andrückbar ist, um Unterdrucköffnungen der Vakuumeinheit zu verschließen.

Ferner wird vorgeschlagen, dass zumindest ein mit dem Flachelement zusammenwirkendes Öffnungselement der Unterdruckschalteinheit und/oder zumindest ein mit dem Flachelement zusammenwirkendes Andrückelement der Unterdruckschalteinheit zumindest teilweise in einem durch die Unterdruckschalteinheit verlaufenden Vakuumkanal der Vakuumeinheit angeordnet sind/ist. Bevorzugt werden/wird das Öffnungselement und/oder das Andrückelement zumindest teilweise von einem mittels der Vakuumeinheit erzeugbaren Fluidstrom, insbesondere von einem mittels der Vakuumeinheit erzeugbaren Luftstrom, umströmt, insbesondere in einem an dem zumindest einen Förderelement angeordneten Zustand des Öffnungselements und/oder des Andrückelements. Vorzugsweise erstreckt sich der Vakuumkanal ausgehend von einer der Führungseinheit zugewandten Seite des zumindest einen Förderelements zumindest bis zu einer Verbindungsseite des zumindest einen Förderelements, an der zumindest ein Saugelement anordenbar ist. Bevorzugt ist die Versorgungsöffnung der Vakuumeinheit zumindest teilweise an dem Vakuumkanal angeordnet. Bevorzugt ist zumindest das zumindest eine Ventilelement zu einem zumindest teilweisen Öffnen und/oder Schließen des Vakuumkanals vorgesehen, insbesondere infolge eines zumindest teilweisen Öffnens und/oder Schließens der Versorgungsöffnung mittels des zumindest einen Ventilelements. Es ist jedoch auch denkbar, dass das Flachelement zu einem zumindest teilweisen Öffnen und/oder Schließen des Vakuumkanals vorgesehen ist, insbesondere alternativ oder zusätzlich zu einem zumindest teilweisen Öffnen und/oder Schließen der Unterdrucköffnung. Mittels der erfindungsgemäßen Ausgestaltung kann vorteilhaft eine kompakte Bauweise der Unterdruckschalteinheit realisiert werden, die besonders vorteilhaft eine positionsvariable Unterdruckerzeugung realisieren kann. Es kann eine konstruktiv einfache Ansteuerung einer Unterdruckerzeugung realisiert werden. Es kann vorteilhaft sichergestellt werden, dass eine Unterdrucköffnung bei einer Positionierung des zumindest einen Förderelements im Bereich der Unterdrucköffnung zuverlässig zumindest teilweise öffenbar ist, um eine besonders vorteilhafte Unterdruckerzeugung zum Halten von zumindest einem Produkt, von zumindest einer Produktgruppe und/oder von zumindest einem Produktstapel an dem zumindest einem Förderelement zu realisieren.

Zudem wird vorgeschlagen, dass die Unterdruckschalteinheit dazu vorgesehen ist, das Flachelement zumindest in einem von der Unterdruckschalteinheit überdeckten Bereich des Flachelements mäanderartig zu führen. Vorzugsweise wird das Flachelement mittels des Öffnungselements und des Andrückelements in einem von der Unterdruckschalteinheit überdeckten Bereich des Flachelements mäanderartig geführt. Vorzugsweise wird das Flachelement mittels des Öffnungselements und zwei Andrückelementen der Unterdruckschalteinheit in einem von der Unterdruckschalteinheit überdeckten Bereich des Flachelements mäanderartig geführt. Mittels der erfindungsgemäßen Ausgestaltung kann eine konstruktiv einfache Ansteuerung einer Unterdruckerzeugung realisiert werden. Es kann vorteilhaft eine zuverlässige Abdichtung der zumindest einen Unterdrucköffnung erfolgen. Es kann vorteilhaft sichergestellt werden, dass eine Unterdrucköffnung bei einer Positionierung des zumindest einen Förderelements im Bereich der Unterdrucköffnung zuverlässig zumindest teilweise öffenbar ist, um eine besonders vorteilhafte Unterdruckerzeugung zum Halten von zumindest einem Produkt, von zumindest einer Produktgruppe und/oder von zumindest einem Produktstapel an dem zumindest einem Förderelement zu realisieren.

Des Weiteren wird vorgeschlagen, dass die Unterdruckschalteinheit zumindest eine Spanneinheit umfasst, mittels derer eine auf das Flachelement einwirkbare Kraft der Unterdruckschalteinheit zu einer Spannung des Flachelements einstellbar ist. Vorzugsweise ist mittels der Spanneinheit eine Position des Öffnungselements relativ zum Förderelement einstellbar. Mittels der erfindungsgemäßen Ausgestaltung kann vorteilhaft sichergestellt werden, dass über eine weitestgehend gesamte Lebensdauer der Transportvorrichtung eine positionsvariable Unterdruckerzeugung realisiert werden kann. Es kann vorteilhaft eine Nachjustierung oder eine Nachspannung des Flachelements erfolgen.

Ferner wird vorgeschlagen, dass die Spanneinheit zumindest ein Exzenterelement aufweist, mittels dessen eine Position eines Öffnungselements der Unterdruckschalteinheit, das von dem Flachelement zumindest teilweise umschlungen wird, einstellbar ist, insbesondere relativ zu dem zumindest einen Förderelement. Es ist jedoch auch denkbar, dass die Spanneinheit ein anderes, einem Fachmann als sinnvoll erscheinendes Spannelement aufweist, wie beispielsweise ein Federelement o. dgl. Mittels der erfindungsgemäßen Ausgestaltung kann konstruktiv einfach eine Möglichkeit zur Nachjustierung oder Nachspannung des Flachelements realisiert werden. Es kann vorteilhaft sichergestellt werden, dass über eine weitestgehend gesamte Lebensdauer der Transportvorrichtung eine positionsvariable Unterdruckerzeugung realisiert werden kann.

Zudem wird vorgeschlagen, dass die Vakuumeinheit eine Vielzahl an Unterdrucköffnung aufweist, die an der Führungseinheit angeordnet sind und mittels des Flachelements zumindest teilweise öffenbar und/oder schließbar sind. Vorzugsweise ist das Flachelement dazu vorgesehen, eine Vielzahl an Unterdrucköffnungen der Vakuumeinheit zu überdecken, insbesondere in einem geschlossenen Zustand der Unterdrucköffnungen. Mittels der zumindest einen an dem zumindest einen Förderelement angeordneten Unterdruckschalteinheit ist vorzugsweise in Abhängigkeit von einer Position des Förderelements relativ zur Führungseinheit eine Vielzahl an Unterdrucköffnungen zumindest teilweise öffenbar und/oder schließbar. Die Vielzahl an Unterdrucköffnungen ist an einer zumindest im Wesentlichen parallel zu einer Führungsbahn der Führungseinheit verlaufenden Seite, insbesondere an der Außenseite, der Führungseinheit angeordnet. Die Vielzahl an Unterdrucköffnungen, ist dazu vorgesehen, fluidtechnisch in Abhängigkeit von einer Position des zumindest einen Förderelements, insbesondere der Vielzahl an Förderelementen, mit dem zumindest einen Förderelement, insbesondere mit der Vielzahl an Förderelementen, zusammenzuwirken, insbesondere zu einer Erzeugung eines Unterdrucks an dem zumindest einen Förderelement, insbesondere an der Vielzahl an Förderelementen, um ein Halten von zumindest einem Produkt, von zumindest einer Produktgruppe und/oder von zumindest einem Produktstapel an dem zumindest einen Förderelement, insbesondere an der Vielzahl an Förderelementen, zu realisieren. Mittels der erfindungsgemäßen Ausgestaltung kann vorteilhaft eine positionsvariable Unterdruckerzeugung realisiert werden. Es kann vorteilhaft eine teilungsflexible Schaltung einer Unterdruckerzeugung infolge einer Positionierung des zumindest einen Förderelements erreicht werden. Es kann eine konstruktiv einfache Ansteuerung einer Unterdruckerzeugung realisiert werden.

Des Weiteren geht die Erfindung aus von einem Verfahren zu einem Transport von zumindest einem Produkt, von zumindest einer Produktgruppe und/oder von zumindest einem Produktstapel mittels einer erfindungsgemäßen Transportvorrichtung, insbesondere zu einem Zuführen zu einem Verpackungsprozess einer Verpackungsmaschine. Es wird vorgeschlagen, dass in zumindest einem Verfahrensschritt ein Flachelement einer Vakuumeinheit der Transportvorrichtung in Abhängigkeit von einer Position zumindest eines Förderelements einer Fördereinheit der Transportvorrichtung mittels einer Unterdruckschalteinheit der Vakuumeinheit bewegt wird, insbesondere zumindest teilweise von einer Unterdrucköffnung der Vakuumeinheit abgehoben wird. Mittels der erfindungsgemäßen Ausgestaltung kann vorteilhaft eine positionsvariable Unterdruckerzeugung realisiert werden. Es kann vorteilhaft eine teilungsflexible Schaltung einer Unterdruckerzeugung infolge einer Positionierung des zumindest einen Förderelements erreicht werden. Es kann eine konstruktiv einfache Ansteuerung einer Unterdruckerzeugung realisiert werden. Es kann vorteilhaft sichergestellt werden, dass eine Unterdrucköffnung bei einer Positionierung des zumindest einen Förderelements im Bereich der Unterdrucköffnung zuverlässig zumindest teilweise öffenbar ist, um eine besonders vorteilhafte Unterdruckerzeugung zum Halten von zumindest einem Produkt, von zumindest einer Produktgruppe und/oder von zumindest einem Produktstapel an dem zumindest einem Förderelement zu realisieren. Es kann vorteilhaft eine flexible Anpassung der Vakuumeinheit an unterschiedlichste Geometrien der Führungseinheit erreicht werden.

Ferner wird vorgeschlagen, dass in zumindest einem Verfahrensschritt zumindest ein, insbesondere elektronisch ansteuerbares, Ventilelement der Unterdruckschalteinheit aktiviert wird, insbesondere infolge eines mittels eines mit dem Förderelement zusammenwirkenden Schleifrings übertragenen Signals oder infolge einer kabellosen Datenkommunikation aktiviert wird. Mittels der erfindungsgemä-ßen Ausgestaltung kann vorteilhaft eine variable Ansteuerung einer Unterdruckerzeugung an dem zumindest einen Förderelement erreicht werden. Es kann vorteilhaft eine besonders flexible Erzeugung eines Unterdrucks zum Halten von zumindest einem Produkt, von zumindest einer Produktgruppe und/oder von zumindest einem Produktstapel an dem zumindest einem Förderelement realisiert werden. Es kann vorteilhaft eine positionsvariable Unterdruckerzeugung realisiert werden. Es kann vorteilhaft eine teilungsflexible Schaltung einer Unterdruckerzeugung infolge einer Positionierung des zumindest einen Förderelements erreicht werden. Es kann eine konstruktiv einfache Ansteuerung einer Unterdruckerzeugung realisiert werden.

Die erfindungsgemäße Transportvorrichtung und/oder das erfindungsgemäße Verfahren sollen/soll hierbei nicht auf die oben beschriebene Anwendung und Ausführungsform beschränkt sein. Insbesondere können/kann die erfindungsgemäße Transportvorrichtung und/oder das erfindungsgemäße Verfahren zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In der Zeichnung sind zwei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen:

- Fig. 1: eine Verpackungsmaschine mit einer erfindungsgemäßen Transportvorrichtung in einer schematischen Darstellung,
- Fig. 2: eine Detailansicht der erfindungsgemäßen Transportvorrichtung, wobei Förderelemente einer Fördereinheit der erfindungsgemäßen Transportvorrichtung entkoppelt von Saugelementen dargestellt sind, in einer schematischen Darstellung,
- Fig. 3: eine Detailansicht einer alternativen erfindungsgemäßen Transportvorrichtung mit horizontal ausgerichteten Saugelementen, wobei Förderelemente einer Fördereinheit der alternativen erfindungsgemäßen Transportvorrichtung in einer ungleichmäßigen Teilung an einer Führungseinheit der alternativen erfindungsgemäßen Transportvorrichtung angeordnet sind, in einer schematischen Darstellung,
- Fig. 4: eine Detailansicht der alternativen erfindungsgemäßen Transportvorrichtung, wobei die Förderelemente der Fördereinheit der alternativen erfindungsgemäßen Transportvorrichtung in einer gleichmäßigen Teilung an einer Führungseinheit der alternativen erfindungsgemäßen Transportvorrichtung angeordnet sind, in einer schematischen Darstellung und
- Fig. 5: eine Schnittansicht der alternativen erfindungsgemäßen Transportvorrichtung in einer schematischen Darstellung.

### Beschreibung der Ausführungsbeispiele

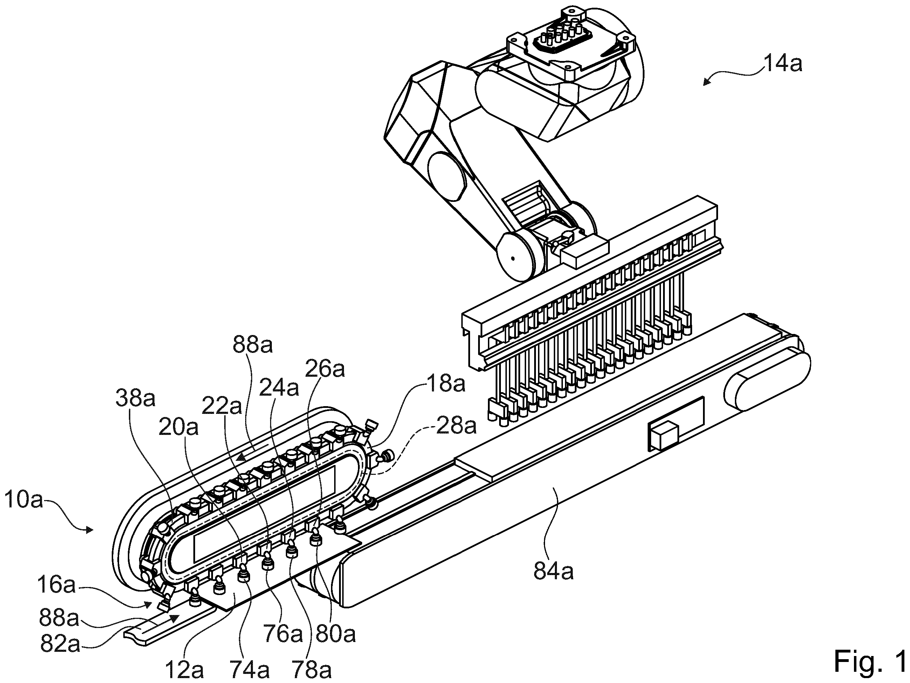

Figur 1 zeigt einen Teil einer Verpackungsmaschine 14a zu einer Durchführung eines Verpackungsprozess von Produkten 12a. Die Verpackungsmaschine 14a umfasst zumindest eine Transportvorrichtung 10a zu einem Transport von zumindest einem Produkt 12a, von zumindest einer Produktgruppe und/oder von zumindest einem Produktstapel, insbesondere zu einer Zuführung zu einem Verpackungsprozess der Verpackungsmaschine 14a. Die Transportvorrichtung 10a ist vorzugsweise dazu vorgesehen, zumindest ein Produkt 12a, zumindest eine Produktgruppe und/oder zumindest einen Produktstapel von einer Zuführvorrichtung 82a der Verpackungsmaschine 14a zu einer weiteren Zuführvorrichtung 84a zu übergeben. Die Transportvorrichtung 10a kann dazu vorgesehen sein, zumindest ein Produkt 12a, zumindest eine Produktgruppe und/oder zumindest einen Produktstapel während einer Übergabe zu drehen, insbesondere um eine Hochachse des zumindest einen Produkts 12a, der zumindest einen Produktgruppe und/oder des zumindest einen Produktstapels, oder geradlinig zu übergeben. Weitere, einem Fachmann als sinnvoll erscheinende Übergabefunktionen können ebenfalls durch die Transportvorrichtung 10a ermöglicht werden, wie beispielsweise eine Durchführung einer Hubfunktion, zu einer Übergabe von zumindest einem Produkt 12a, zumindest einer Produktgruppe und/oder zumindest einem Produktstapel von in unterschiedlich angeordneten Förderebenen angeordneten Zuführvorrichtungen, ein Abheben von zumindest einem Produkt 12a, zumindest einer Produktgruppe und/oder zumindest einem Produktstapel von einer Zuführvorrichtung, ein anschließendes Drehen und ein Wiederablegen auf der Zuführvorrichtung oder einer weiteren Zuführvorrichtung o. dgl.

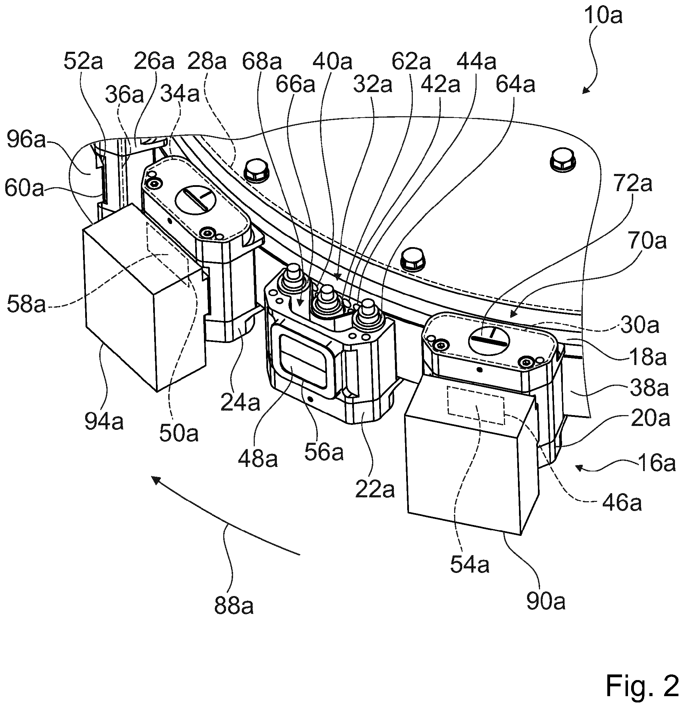

Die Transportvorrichtung 10a zu einem Transport von zumindest einem Produkt 12a, von zumindest einer Produktgruppe und/oder von zumindest einem Produktstapel umfasst zumindest eine Fördereinheit 16a. Die Fördereinheit 16a in dem in Figuren 1 und 2 dargestellten Ausführungsbeispiel weist eine vertikale Ausrichtung auf. Eine Transportrichtung 88a der Fördereinheit 16a verläuft insbesondere in einer Vertikalebene. Vorzugsweise erfolgt bei einer Ausgestaltung der Fördereinheit 16a als geschlossene Schleife ein Richtungswechsel der Transportrichtung 88a der Fördereinheit 16a in der Vertikalebene. Bevorzugt verläuft die Transportrichtung 88a umlaufend um die Führungseinheit 18a, insbesondere in der Vertikalebene. Die Transportvorrichtung 10a umfasst ferner zumindest die, insbesondere als geschlossene Schleife ausgebildete, Führungseinheit 18a, an welcher eine Vielzahl an Förderelementen 20a, 22a, 24a, 26a der Fördereinheit 16a, die voneinander unabhängig geschwindigkeits- und/oder positionsgeregelt antreibbar sind, angeordnet ist. Die Führungseinheit 18a weist eine Führungsbahn für die Vielzahl an Förderelementen 20a, 22a, 24a, 26a der Fördereinheit 16a auf. In dem in den Figuren 1 und 2 dargestellten Ausführungsbeispiel weist die Führungsbahn der Führungseinheit 18a einen ovalen Verlauf auf. Die Führungsbahn der Führungseinheit 18a ist als endlose Führungsbahn ausgebildet. Es ist jedoch auch denkbar, dass die Führungsbahn der Führungseinheit 18a eine andere, einem Fachmann als sinnvoll erscheinende Ausgestaltung aufweist, wie beispielsweise eine Ausgestaltung mit einem endlichen bogenförmigen Verlauf, mit einem endlichen wellenlinienartigen Verlauf, mit einem endlosen kreisartigen Verlauf o. dgl. Die Führungsbahn der Führungseinheit 18a ist in einer Vertikalebene verlaufend ausgerichtet.

Des Weiteren umfasst die Transportvorrichtung 10a zumindest eine Vakuumeinheit 28a zu einer Erzeugung eines Unterdrucks an den Förderelementen 20a, 22a, 24a, 26a zu einem Halten von zumindest einem Produkt 12a, von zumindest einer Produktgruppe und/oder von zumindest einem Produktstapel an den Förderelementen 20a, 22a, 24a, 26a. Die Vakuumeinheit 28a umfasst zumindest eine Unterdruckschalteinheit 30a, 32a, 34a, 36a zu einer Schaltung einer Unterdruckerzeugung an zumindest einem der Förderelemente 20a, 22a, 24a, 26a, wobei die Unterdruckschalteinheit 30a, 32a, 34a, 36a an dem zumindest einen der Förderelemente 20a, 22a, 24a, 26a angeordnet ist und zusammen mit dem zumindest einen Förderelement 20a, 22a, 24a, 26a entlang der Führungseinheit 18a bewegbar ist.

Die Vakuumeinheit 28a weist zumindest eine, einem Fachmann bereits bekannte Unterdruckerzeugungseinheit (hier nicht näher dargestellt), wie beispielsweise ein Vakuumgebläse o. dgl. auf, um einen Unterdruck an den Förderelementen 20a, 22a, 24a, 26a zu erzeugen. Die Fördereinheit 16a umfasst vorzugsweise zumindest ein Saugelement 74a, 76a, 78a, 80a, das an dem zumindest einen Förderelement 20a, 22a, 24a, 26a angeordnet ist (in Figur 2 sind die Förderelemente 20a, 22a, 24a, 26a ohne daran angeordnete Saugelemente 74a, 76a, 78a, 80a dargestellt). Das Saugelement 74a, 76a, 78a, 80a ist insbesondere dazu vorgesehen, mit zumindest einem Produkt 12a, zumindest einer Produktgruppe oder zumindest einem Produktstapel in Kontakt gebracht zu werden und dieses/diese/diesen infolge einer Unterdruckerzeugung zu halten, insbesondere durch einen Vertikalhub von der Zuführvorrichtung 82a abzuheben. Das Saugelement 74a, 76a, 78a, 80a kann beispielsweise als Saugnapf o. dgl. ausgebildet sein. Das Saugelement 74a, 76a, 78a, 80a ist vorzugsweise mit einem am Förderelement 20a, 22a, 24a, 26a angeordneten Vakuumkanal 68a der Vakuumeinheit 28a fluidtechnisch auf eine, einem Fachmann bereits bekannte Art und Weise verbunden. Zusätzlich ist es denkbar, dass die Fördereinheit 16a zumindest ein an dem zumindest einen Förderelement 20a, 22a, 24a, 26a angeordnetes Greifelement (hier nicht näher dargestellt) umfasst, das dazu vorgesehen ist, zumindest ein Produkt 12a, zumindest eine Produktgruppe oder zumindest einen

Produktstapel zusätzlich zum Saugelement 74a, 76a, 78a, 80a mittels einer kraft- und/oder formschlüssigen Verbindung an dem zumindest einen Förderelement 20a, 22a, 24a, 26a zu halten. Es ist auch denkbar, dass das Greifelement an einem Hilfsförderelement der Fördereinheit 16a angeordnet ist.

Das Saugelement 74a, 76a, 78a, 80a ist vorzugsweise aus einem elastischen Werkstoff, wie beispielsweise einem Elastomere o. dgl., gebildet, um sich vorteilhaft einer Oberflächenstruktur zumindest eines Produkts 12a, zumindest einer Produktgruppe oder zumindest einem Produktstapel anzupassen. Das Saugelement 74a, 76a, 78a, 80a weist vorzugsweise eine, einem Fachmann bereits bekannte Ausgestaltung auf. Insbesondere umfasst die Fördereinheit 16a eine Vielzahl an Saugelementen 74a, 76a, 78a, 80a, wobei vorzugsweise jeweils an einem Förderelement 20a, 22a, 24a, 26a ein Saugelement 74a, 76a, 78a, 80a angeordnet ist. Es ist jedoch auch denkbar, dass mehr als ein Saugelement 74a, 76a, 78a, 80a an einem Förderelement 20a, 22a, 24a, 26a angeordnet sind oder dass einzelne Förderelemente 20a, 22a, 24a, 26a saugelementfrei ausgebildet sind. Es sind jegliche, einem Fachmann als sinnvoll erscheinende Ausgestaltungen von Förderelementen 20a, 22a, 24a, 26a mit oder ohne Saugelemente 74a, 76a, 78a, 80a denkbar.

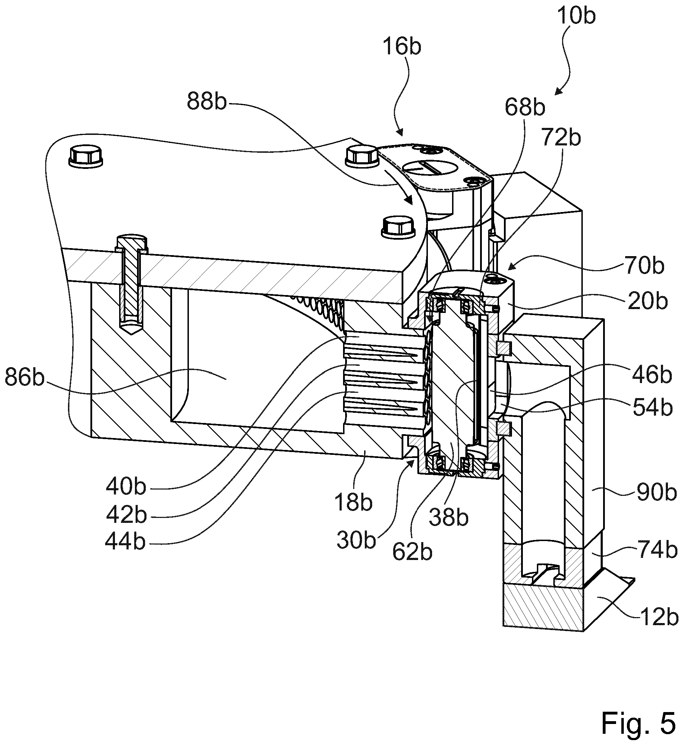

Die Vakuumeinheit 28a weist zumindest ein Flachelement 38a, insbesondere ein flexibles Umschlingungselement, auf, das zumindest zu einem zumindest teilweisen Öffnen von zumindest einer Unterdrucköffnung 40a, 42a, 44a der Vakuumeinheit 28a in Abhängigkeit von einer Position des zumindest einen Förderelements 20a, 22a, 24a, 26a mit der Unterdruckschalteinheit 30a, 32a, 34a, 36a zusammenwirkt (vgl. Figur 2). Das Flachelement 38a ist vorzugsweise als Riemen oder als Dichtband ausgebildet, der oder das an der Führungseinheit 18a angeordnet ist. Erfindungsgemäß umschlingt das Flachelement 38a die Führungseinheit 18a zumindest teilweise, in einem Bereich der Führungseinheit 18a, in dem die zumindest eine Unterdrucköffnung 40a, 42a, 44a an der Führungseinheit 18a angeordnet ist. Die Vakuumeinheit 28a weist vorzugsweise eine Vielzahl an Unterdrucköffnungen 40a, 42a, 44a auf, die an der Führungseinheit 18a angeordnet sind und mittels des Flachelements 38a zumindest teilweise öffenbar und/oder schließbar sind. Die zumindest eine Unterdrucköffnung 40a, 42a, 44a, insbesondere die Vielzahl an Unterdrucköffnungen 40a, 42a, 44a, ist an einer den Förderelementen 20a, 22a, 24a, 26a zugewandten Außenseite der Führungseinheit 18a angeordnet. Vorzugsweise sind die Unterdrucköffnungen 40a, 42a, 44a gitternetzartig an der Außenseite der Führungseinheit 18a angeordnet (vgl. Figur 2 sowie Figur 5 des zweiten Ausführungsbeispiels). Die zumindest eine Unterdrucköffnung 40a, 42a, 44a, insbesondere die Vielzahl an Unterdrucköffnungen 40a, 42a, 44a, erstreckt sich ausgehend von einer Vakuumkammer (in Figuren 1 und 2 nicht dargestellt, jedoch in Figur 5 des zweiten Ausführungsbeispiel, das hinsichtlich eines Aufbaus der Vakuumeinheit 28a analog ausgebildet ist) der Vakuumeinheit 28a in Richtung der Führungsbahn der Führungseinheit 18a bis zu einer Außenumgebung, insbesondere entlang einer quer zur Transportrichtung 88a verlaufenden Richtung. Die zumindest eine Unterdrucköffnung 40a, 42a, 44a, insbesondere die Vielzahl an Unterdrucköffnungen 40a, 42a, 44a, ist mittels des Flachelements 38a überdeckbar, insbesondere mittels des Flachelements 38a öffenbar und/oder schließbar.

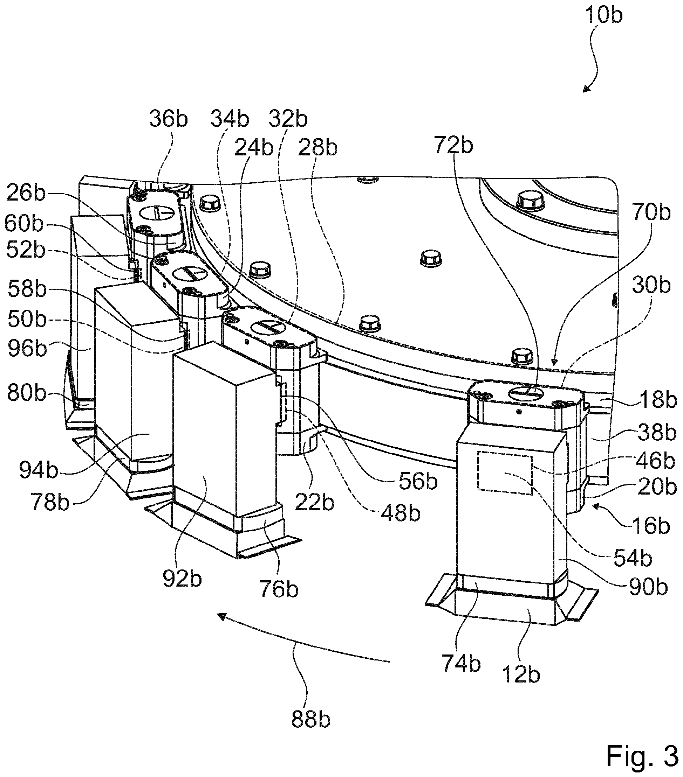

Die Unterdruckschalteinheit 30a, 32a, 34a, 36a weist zumindest ein, insbesondere elektronisch ansteuerbares, Ventilelement 46a, 48a, 50a, 52a auf, das zu einem Öffnen und/oder Schließen einer an dem zumindest einen Förderelement 20a, 22a, 24a, 26a angeordneten Versorgungsöffnung 54a, 56a, 58a, 60a der Vakuumeinheit 28a vorgesehen ist (Figur 2). Das Ventilelement 46a, 48a, 50a, 52a ist bevorzugt als elektronisch ansteuerbares Ventilelement ausgebildet. Es ist jedoch auch denkbar, dass das Ventilelement 46a, 48a, 50a, 52a als mechanisch ansteuerbares Ventilelement ausgebildet ist. Die Versorgungsöffnung 54a, 56a, 58a, 60a ist vorzugsweise an einem Vakuumreservoir 90a, 92a, 96a (in Figuren 3 bis 5 Vakuumreservoir 90b, 92b, 94b, 96b) der Vakuumeinheit 28a angeordnet, das an, insbesondere in, dem Förderelement 20a, 22a, 24a, 26a angeordnet ist. Es kann vorteilhaft infolge eines Verschließens der Versorgungsöffnung 54a, 56a, 58a, 60a mittels des Ventilelements 46a, 48a, 50a, 52a, insbesondere nach einer Erzeugung eines Vakuums im Vakuumreservoir 90a, 92a, 96a, ein Halten von zumindest einem Produkt 12a, von zumindest einer Produktgruppe und/oder von zumindest einem Produktstapel an dem zumindest einen Förderelement 20a, 22a, 24a, 26a realisiert werden, das vorzugsweise unabhängig von einer stetigen Vakuumerzeugung, insbesondere von einer dauerhaften Verbindung zwischen der Unterdrucköffnung 40a, 42a, 44a und der Versorgungsöffnung 54a, 56a, 58a, 60a, ist.

Die Unterdruckschalteinheit 30a, 32a, 34a, 36a weist zumindest ein Öffnungselement 62a auf, das zumindest teilweise von dem Flachelement 38a umschlungen wird und dazu vorgesehen ist, das Flachelement 38a in Abhängigkeit von einer Position des zumindest einen Förderelements 20a, 22a, 24a, 26a zumindest teilweise von der zumindest einen Unterdrucköffnung 40a, 42a, 44a abzuheben (Figur 2). Das Öffnungselement 62a ist als Wälzelement, insbesondere als Rolle oder als Walze, ausgebildet. Das Öffnungselement 62a umfasst vorzugsweise eine weiche Oberfläche, wie beispielsweise eine Oberfläche aus Elastomere, aus Schaumstoff o. dgl. Das Öffnungselement 62a ist beweglich, insbesondere drehbar, an dem zumindest einen Förderelement 20a, 22a, 24a, 26a gelagert. Vorzugsweise ist das Öffnungselement 62a bombiert ausgebildet, insbesondere bei einer Ausgestaltung des Öffnungselements 62a als Wälzelement. Es ist jedoch auch denkbar, dass das Öffnungselement 62a eine andere, einem Fachmann als sinnvoll erscheinende Ausgestaltung aufweist, wie beispielsweise eine Ausgestaltung als Formschlusselement, als Eingriffselement o. dgl., das bevorzugt mit einem am Flachelement 38a angeordneten Betätigungselement, insbesondere einem Betätigungssteg (beispielsweise einem Schwalbenschwanzsteg o. dgl.), der sich quer zu einer Haupterstreckungsebene des Flachelements 38a erstreckt, zusammenwirkt und dazu vorgesehen ist, in Abhängigkeit von einer Position des zumindest einen Förderelements 20a, 22a, 24a, 26a das Flachelement 38a zumindest teilweise von der zumindest einen Unterdrucköffnung 40a, 42a, 44a abzuheben.

Die Unterdruckschalteinheit 30a, 32a, 34a, 36a weist zumindest ein Andrückelement 64a, 66a auf, das dazu vorgesehen ist, das Flachelement 38a zumindest in einem Randbereich des zumindest einen Förderelements 20a, 22a, 24a, 26a an die Vakuumeinheit 28a anzudrücken, insbesondere zu einer Realisierung einer Dichtungsfunktion (Figur 2). Das Andrückelement 64a, 66a ist beweglich, insbesondere drehbar, an dem zumindest einen Förderelement 20a, 22a, 24a, 26a angeordnet. Das Andrückelement 64a, 66a ist als Wälzelement, insbesondere als Rolle oder als Walze, ausgebildet, das auf dem Flachelement 38a wälzt. Es ist jedoch auch denkbar, dass das Andrückelement 64a, 66a eine andere, einem Fachmann als sinnvoll erscheinende Ausgestaltung aufweist, wie beispielsweise eine Ausgestaltung als Gleitelement, das dazu vorgesehen ist, das Flachelement 38a zumindest in einem Randbereich des zumindest einen Förderelements 20a, 22a, 24a, 26a an die Vakuumeinheit 28a anzudrücken, insbesondere infolge eines Gleitens auf einer Oberfläche des Flachelements 38a während einer Bewegung des zumindest einen Förderelements 20a, 22a, 24a, 26a entlang der Führungsbahn der Führungseinheit 18a. Das Andrückelement 64a, 66a oder die Andrückelemente 64a, 66a umfasst/umfassen vorzugsweise eine weiche Oberfläche, wie beispielsweise eine Oberfläche aus Elastomere, aus Schaumstoff o. dgl.

Das Andrückelement 64a, 66a ist auf einer der zumindest einen Unterdrucköffnung 40a, 42a, 44a der Vakuumeinheit 28a abgewandten Seite des Flachelements 38a angeordnet, insbesondere an dem zumindest einen Förderelement 20a, 22a, 24a, 26a. Vorzugsweise umfasst die Unterdruckschalteinheit 30a, 32a, 34a, 36a zumindest zwei Andrückelemente 64a, 66a, die dazu vorgesehen sind, das Flachelement 38a zumindest in einem Randbereich des zumindest einen Förderelements 20a, 22a, 24a, 26a an die Vakuumeinheit 28a anzudrücken, insbesondere zu einer Realisierung einer Dichtungsfunktion. Die Andrückelemente 64a, 66a sind beweglich, insbesondere drehbar, an dem zumindest einen Förderelement 20a, 22a, 24a, 26a angeordnet. Das Öffnungselement 62a ist bevorzugt zwischen den Andrückelementen 64a, 66a angeordnet, insbesondere betrachtet entlang der Transportrichtung 88a. Das zumindest eine mit dem Flachelement 38a zusammenwirkende Öffnungselement 62a der Unterdruckschalteinheit 30a, 32a, 34a, 36a und/oder das zumindest eine mit dem Flachelement 38a zusammenwirkende Andrückelement 64a, 66a der Unterdruckschalteinheit 30a, 32a, 34a, 36a sind/ist zumindest teilweise in einem durch die Unterdruckschalteinheit 30a, 32a, 34a, 36a verlaufenden Vakuumkanal 68a der Vakuumeinheit 28a angeordnet. Die Unterdruckschalteinheit 30a, 32a, 34a, 36a ist dazu vorgesehen, das Flachelement 38a zumindest in einem von der Unterdruckschalteinheit 30a, 32a, 34a, 36a überdeckten Bereich des Flachelements 38a mäanderartig zu führen, insbesondere infolge eines Zusammenwirkens des Öffnungselements 62a mit zumindest einem der Andrückelemente 64a, 66a.

Die Unterdruckschalteinheit 30a, 32a, 34a, 36a umfasst zumindest eine Spanneinheit 70a, mittels derer eine auf das Flachelement 38a einwirkbare Kraft der Unterdruckschalteinheit 30a, 32a, 34a, 36a zu einer Spannung des Flachelements 38a einstellbar ist (Figur 2). Die Spanneinheit 70a weist zumindest ein Exzenterelement 72a auf, mittels dessen eine Position des Öffnungselements 62a der Unterdruckschalteinheit 30a, 32a, 34a, 36a, das von dem Flachelement 38a zumindest teilweise umschlungen wird, einstellbar ist. Das Exzenterelement 72a ist bevorzugt an dem zumindest einen Förderelement 20a, 22a, 24a, 26a angeordnet. Das Exzenterelement 72a ist vorzugsweise als exzentrische Wellenlageraufnahme ausgebildet. Es ist vorteilhaft in Abhängigkeit von einer Position des Exzenterelements 72a relativ zu dem zumindest einen Förderelement 20a, 22a, 24a, 26a eine Position des Öffnungselements 62a an dem zumindest einen Förderelement 20a, 22a, 24a, 26a einstellbar.

Bei einem Verfahren zu einem Transport von zumindest einem Produkt 12a, von zumindest einer Produktgruppe und/oder von zumindest einem Produktstapel mittels der Transportvorrichtung 10a, insbesondere zu einem Zuführen zu einem Verpackungsprozess der Verpackungsmaschine 14a wird in zumindest einem Verfahrensschritt das Flachelement 38a der Vakuumeinheit 28a der Transportvorrichtung 10a in Abhängigkeit von einer Position des zumindest einen Förderelements 20a, 22a, 24a, 26a der Fördereinheit 16a der Transportvorrichtung 10a mittels der Unterdruckschalteinheit 30a, 32a, 34a, 36a der Vakuumeinheit 28a bewegt, insbesondere zumindest teilweise von der Unterdrucköffnung 40a, 42a, 44a der Vakuumeinheit 28a abgehoben. In zumindest einem Verfahrensschritt wird das, insbesondere elektronisch ansteuerbare, Ventilelement 46a, 48a, 50a, 52a der Unterdruckschalteinheit 30a, 32a, 34a, 36a aktiviert, insbesondere infolge eines mittels eines mit dem Förderelement 20a, 22a, 24a, 26a zusammenwirkenden Schleifrings (hier nicht näher dargestellt) übertragenen Signals oder infolge einer kabellosen Datenkommunikation. Der Schleifring ist vorzugsweise an der Führungseinheit 18a angeordnet.

Hinsichtlich weiterer Verfahrensschritte des Verfahrens zu einem Transport von zumindest einem Produkt 12a, von zumindest einer Produktgruppe und/oder von zumindest einem Produktstapel mittels der Transportvorrichtung 10a darf auf die vorhergehende Beschreibung der Transportvorrichtung 10a verwiesen werden, da diese Beschreibung analog auch auf das Verfahren zu lesen ist und somit alle Merkmale hinsichtlich der Transportvorrichtung 10a auch in Bezug auf das Verfahren zu einem Transport von zumindest einem Produkt 12a, von zumindest einer Produktgruppe und/oder von zumindest einem Produktstapel mittels der Transportvorrichtung 10a als offenbart gelten.

In den Figuren 3 und 5 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 und 2, verwiesen werden kann. Zur Unterscheidung der Ausführungsbeispiele ist der Buchstabe a den Bezugszeichen des Ausführungsbeispiels in den Figuren 1 und 2 nachgestellt. In den Ausführungsbeispielen der Figuren 3 bis 5 ist der Buchstabe a durch den Buchstaben b ersetzt.

Figur 3 zeigt eine Detailansicht einer alternativen Transportvorrichtung 10b. Die Transportvorrichtung 10b zu einem Transport von zumindest einem Produkt 12b, von zumindest einer Produktgruppe und/oder von zumindest einem Produktstapel, insbesondere zu einer Zuführung zu einem Verpackungsprozess einer Verpackungsmaschine (hier nicht näher dargestellt), umfasst zumindest eine Fördereinheit 16b, mit zumindest einer, insbesondere als geschlossene Schleife ausgebildeten, Führungseinheit 18b, an welcher eine Vielzahl an Förderelementen 20b, 22b, 24b, 26b der Fördereinheit 16b, die voneinander unabhängig geschwindigkeits- und/oder positionsgeregelt antreibbar sind, angeordnet ist, und zumindest eine Vakuumeinheit 28b zu einer Erzeugung eines Unterdrucks an den Förderelementen 20b, 22b, 24b, 26b zu einem Halten von zumindest einem Produkt 12b, von zumindest einer Produktgruppe und/oder von zumindest einem Produktstapel an den Förderelementen 20b, 22b, 24b, 26b. Die Vakuumeinheit 28b umfasst zumindest eine Unterdruckschalteinheit 30b, 32b, 34b, 36b zu einer Schaltung einer Unterdruckerzeugung an zumindest einem der Förderelemente 20b, 22b, 24b, 26b, wobei die Unterdruckschalteinheit 30b, 32b, 34b, 36b an dem zumindest einen der Förderelemente 20b, 22b, 24b, 26b angeordnet ist und zusammen mit dem zumindest einen Förderelement 20b, 22b, 24b, 26b entlang der Führungseinheit 18b bewegbar ist. Im Unterschied zu der in den Figuren 1 und 2 dargestellten Transportvorrichtung 10a weist die in den Figuren 3 bis 5 dargestellten Fördereinheit 16b der Transportvorrichtung 10b eine horizontale Ausrichtung auf. Eine Transportrichtung 88b der Fördereinheit 16b verläuft insbesondere in einer Horizontalebene. Die Führungseinheit 18b weist eine Führungsbahn für die Vielzahl an Förderelementen 20b, 22b, 24b, 26b der Fördereinheit 16b auf, die einen sich in einer Horizontalebene erstreckenden Verlauf aufweist.

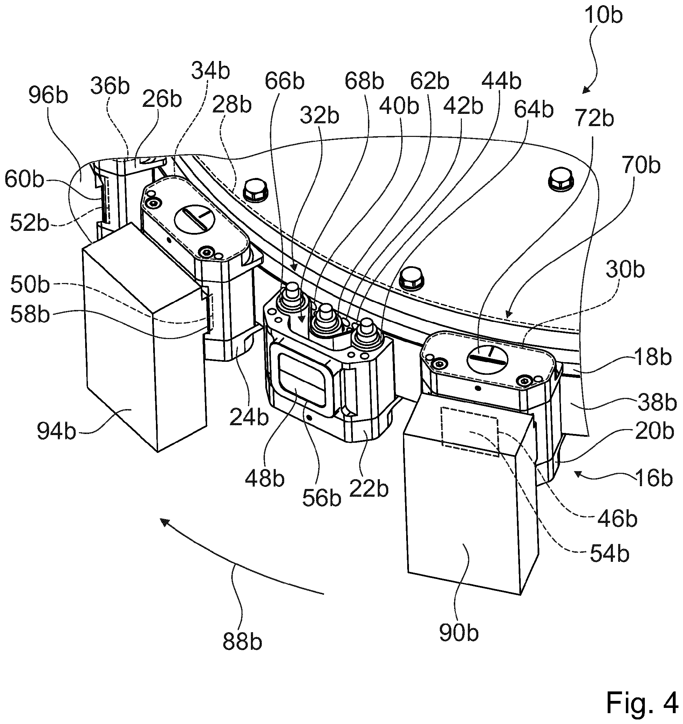

Die Vakuumeinheit 28b umfasst zumindest ein Flachelement 38b, insbesondere ein flexibles Umschlingungselement, das zumindest zu einem zumindest teilweisen Öffnen von zumindest einer Unterdrucköffnung 40b, 42b, 44b der Vakuumeinheit 28b in Abhängigkeit von einer Position des zumindest einen Förderelements 20b, 22b, 24b, 26b mit der Unterdruckschalteinheit 30b, 32b, 34b, 36b zusammenwirkt (vgl. Figuren 4 und 5). Das Flachelement 38b ist vorzugsweise als Riemen oder als Dichtband ausgebildet, der oder das an der Führungseinheit 18b angeordnet ist. Insbesondere umschlingt das Flachelement 38b die Führungseinheit 18b zumindest teilweise, insbesondere in einem Bereich der Führungseinheit 18b, in dem die zumindest eine Unterdrucköffnung 40b, 42b, 44b an der Führungseinheit 18b angeordnet ist. Die Vakuumeinheit 28b weist vorzugsweise eine Vielzahl an Unterdrucköffnungen 40b, 42b, 44b auf, die an der Führungseinheit 18b angeordnet sind und mittels des Flachelements 38b zumindest teilweise öffenbar und/oder schließbar sind. Die zumindest eine Unterdrucköffnung 40b, 42b, 44b, insbesondere die Vielzahl an Unterdrucköffnungen 40b, 42b, 44b, ist an einer den Förderelementen 20b, 22b, 24b, 26b zugewandten Außenseite der Führungseinheit 18b angeordnet. Vorzugsweise sind die Unterdrucköffnungen 40b, 42b, 44b gitternetzartig an der Außenseite der Führungseinheit 18b angeordnet (vgl. Figur 5). Die zumindest eine Unterdrucköffnung 40b, 42b, 44b, insbesondere die Vielzahl an Unterdrucköffnungen 40b, 42b, 44b, erstreckt sich ausgehend von einer Vakuumkammer 86b der Vakuumeinheit 28b in Richtung der Führungsbahn der Führungseinheit 18b bis zu einer Außenumgebung oder bis zu dem zumindest einen Förderelement 20b, 22b, 24b, 26b, insbesondere entlang einer quer zur Transportrichtung 88b verlaufenden Richtung. Die zumindest eine Unterdrucköffnung 40b, 42b, 44b, insbesondere die Vielzahl an Unterdrucköffnungen 40b, 42b, 44b, ist mittels des Flachelements 38b überdeckbar, insbesondere mittels des Flachelements 38b öffenbar und/oder schließbar.

Die Unterdruckschalteinheit 30b, 32b, 34b, 36b weist zumindest ein Öffnungselement 62b auf, das zumindest teilweise von dem Flachelement 38b umschlungen wird und dazu vorgesehen ist, das Flachelement 38b in Abhängigkeit von einer Position des zumindest einen Förderelements 20b, 22b, 24b, 26b zumindest teilweise von der zumindest einen Unterdrucköffnung 40b, 42b, 44b abzuheben (Figuren 4 und 5). Das Öffnungselement 62b ist als Wälzelement, insbesondere als Rolle oder als Walze, ausgebildet. Das Öffnungselement 62b ist beweglich, insbesondere drehbar, an dem zumindest einen Förderelement 20b, 22b, 24b, 26b gelagert. Vorzugsweise ist das Öffnungselement 62b bombiert ausgebildet, insbesondere bei einer Ausgestaltung des Öffnungselements 62b als Wälzelement.

Die Unterdruckschalteinheit 30b, 32b, 34b, 36b weist zumindest ein Andrückelement 64b, 66b auf, das dazu vorgesehen ist, das Flachelement 38b zumindest in einem Randbereich des zumindest einen Förderelements 20b, 22b, 24b, 26b an die Vakuumeinheit 28b anzudrücken, insbesondere zu einer Realisierung einer Dichtungsfunktion (Figur 4). Das Andrückelement 64b, 66b ist beweglich, insbesondere drehbar, an dem zumindest einen Förderelement 20b, 22b, 24b, 26b angeordnet. Das Andrückelement 64b, 66b ist als Wälzelement, insbesondere als Rolle oder als Walze, ausgebildet, das auf dem Flachelement 38b wälzt.

Hinsichtlich weiterer Merkmale und Funktionen der in den Figuren 3 bis 5 dargestellten Transportvorrichtung 10b darf auf die Beschreibung der in den Figuren 1 und 2 dargestellten Transportvorrichtung 10a verwiesen werden, die zumindest im Wesentlichen analog auf die den Figuren 3 bis 5 dargestellten Transportvorrichtung 10b anzuwenden ist.

## Patentansprüche

1. Transportvorrichtung zu einem Transport von zumindest einem Produkt (12a; 12b), von zumindest einer Produktgruppe und/oder von zumindest einem Produktstapel, insbesondere zu einer Zuführung zu einem Verpackungsprozess einer Verpackungsmaschine (14a), mit zumindest einer Fördereinheit (16a; 16b), mit zumindest einer, insbesondere als geschlossene Schleife ausgebildeten, Führungseinheit (18a; 18b), an welcher eine Vielzahl an Förderelementen (20a, 22a, 24a, 26a; 20b, 22b, 24b, 26b) der Fördereinheit (16a; 16b), die voneinander unabhängig geschwindigkeits- und/oder positionsgeregelt antreibbar sind, angeordnet ist, und mit zumindest einer Vakuumeinheit (28a; 28b) zu einer Erzeugung eines Unterdrucks an den Förderelementen (20a, 22a, 24a, 26a; 20b, 22b, 24b, 26b) zu einem Halten von zumindest einem Produkt (12a; 12b), von zumindest einer Produktgruppe und/oder von zumindest einem Produktstapel an den Förderelementen (20a, 22a, 24a, 26a; 20b, 22b, 24b, 26b), die zumindest eine Unterdruckschalteinheit (30a, 32a, 34a, 36a; 30b, 32b, 34b, 36b) zu einer Schaltung einer Unterdruckerzeugung an zumindest einem der Förderelemente (20a, 22a, 24a, 26a; 20b, 22b, 24b, 26b) aufweist, wobei die Unterdruckschalteinheit (30a, 32a, 34a, 36a; 30b, 32b, 34b, 36b) an dem zumindest einen der Förderelemente (20a, 22a, 24a, 26a; 20b, 22b, 24b, 26b) angeordnet ist und zusammen mit dem zumindest einen Förderelement (20a, 22a, 24a, 26a; 20b, 22b, 24b, 26b) entlang der Führungseinheit (18a; 18b) bewegbar ist, wobei die Vakuumeinheit (28a; 28b) zumindest ein Flachelement (38a; 38b), insbesondere ein flexibles Umschlingungselement, aufweist, das zumindest zu einem zumindest teilweisen Öffnen von zumindest einer Unterdrucköffnung (40a, 42a, 44a; 40b, 42b, 44b) der Vakuumeinheit (28a; 28b) in Abhängigkeit von einer Position des zumindest einen Förderelements (20a, 22a, 24a, 26a; 20b, 22b, 24b, 26b) mit der Unterdruckschalteinheit (30a, 32a, 34a, 36a; 30b, 32b, 34b, 36b) zusammenwirkt, **dadurch gekennzeichnet, dass** das Flachelement (38a; 38b) die Führungseinheit (18a; 18b) in einem Bereich der Führungseinheit (18a; 18b), in dem die zumindest eine Unterdrucköffnung (40a, 42a, 44a; 40b, 42b, 44b) an der Führungseinheit (18a; 18b) angeordnet ist, zumindest teilweise umschlingt.

2. Transportvorrichtung nach Anspruch 1, **dadurch gekennzeichnet, dass** die Unterdruckschalteinheit (30a, 32a, 34a, 36a; 30b, 32b, 34b, 36b) zumindest ein, insbesondere elektronisch ansteuerbares, Ventilelement (46a, 48a, 50a, 52a; 46b, 48b, 50b, 52b) aufweist, das zu einem Öffnen und/oder Schließen einer an dem zumindest einen Förderelement (20a, 22a, 24a, 26a; 20b, 22b, 24b, 26b) angeordneten Versorgungsöffnung (54a, 56a, 58a, 60a; 54b, 56b, 58b, 60b) der Vakuumeinheit (28a; 28b) vorgesehen ist.

3. Transportvorrichtung nach Anspruch 1 oder 2, **dadurch gekennzeichnet, dass** die Unterdruckschalteinheit (30a, 32a, 34a, 36a; 30b, 32b, 34b, 36b) zumindest ein Öffnungselement (62a; 62b) aufweist, das zumindest teilweise von dem Flachelement (38a; 38b) umschlungen wird und dazu vorgesehen ist, das Flachelement (38a; 38b) in Abhängigkeit von einer Position des zumindest einen Förderelements (20a, 22a, 24a, 26a; 20b, 22b, 24b, 26b) zumindest teilweise von der zumindest einen Unterdrucköffnung (40a, 42a, 44a; 40b, 42b, 44b) abzuheben.

4. Transportvorrichtung nach Anspruch 3, **dadurch gekennzeichnet, dass** das Öffnungselement (62a; 62b) als Wälzelement, insbesondere als Rolle oder als Walze, ausgebildet ist.

5. Transportvorrichtung nach Anspruch 4, **dadurch gekennzeichnet, dass** das Öffnungselement (62a; 62b) bombiert ausgebildet ist.

6. Transportvorrichtung nach einem der vorhergehenden Ansprüche,
**dadurch gekennzeichnet, dass** die Unterdruckschalteinheit (30a, 32a, 34a, 36a; 30b, 32b, 34b, 36b) zumindest ein Andrückelement (64a, 66a; 64b, 66b) aufweist, das dazu vorgesehen ist, das Flachelement (38a; 38b) zumindest in einem Randbereich des zumindest einen Förderelements (20a, 22a, 24a, 26a; 20b, 22b, 24b, 26b) an die Vakuumeinheit (28a; 28b) anzudrücken, insbesondere zu einer Realisierung einer Dichtungsfunktion.

7. Transportvorrichtung nach Anspruch 6, **dadurch gekennzeichnet, dass** das Andrückelement (64a, 66a; 64b, 66b) als Wälzelement, insbesondere als Rolle oder als Walze, ausgebildet ist, das auf dem Flachelement (38a; 38b) wälzt.

8. Transportvorrichtung nach Anspruch 6 oder 7, **dadurch gekennzeichnet, dass** das Andrückelement (64a, 66a; 64b, 66b) auf einer der zumindest einen Unterdrucköffnung (40a, 42a, 44a; 40b, 42b, 44b) der Vakuumeinheit (28a; 28b) abgewandten Seite des Flachelements (38a; 38b) angeordnet ist.

9. Transportvorrichtung nach einem der vorhergehenden Ansprüche,
**dadurch gekennzeichnet, dass** zumindest ein mit dem Flachelement (38a; 38b) zusammenwirkendes Öffnungselement (62a; 62b) der Unterdruckschalteinheit (30a, 32a, 34a, 36a; 30b, 32b, 34b, 36b) und/oder zumindest ein mit dem Flachelement (38a; 38b) zusammenwirkendes Andrückelement (64a, 66a; 64b, 66b) der Unterdruckschalteinheit (30a, 32a, 34a, 36a; 30b, 32b, 34b, 36b) zumindest teilweise in einem durch die Unterdruckschalteinheit (30a, 32a, 34a, 36a; 30b, 32b, 34b, 36b) verlaufenden Vakuumkanal (68a; 68b) der Vakuumeinheit (28a; 28b) angeordnet sind/ist.

10. Transportvorrichtung nach einem der vorhergehenden Ansprüche,
**dadurch gekennzeichnet, dass** die Unterdruckschalteinheit (30a, 32a, 34a, 36a; 30b, 32b, 34b, 36b) dazu vorgesehen ist, das Flachelement (38a; 38b) zumindest in einem von der Unterdruckschalteinheit (30a, 32a, 34a, 36a; 30b, 32b, 34b, 36b) überdeckten Bereich des Flachelements (38a; 38b) mäanderartig zu führen.

11. Transportvorrichtung nach einem der vorhergehenden Ansprüche,
**dadurch gekennzeichnet, dass** die Unterdruckschalteinheit (30a, 32a, 34a, 36a; 30b, 32b, 34b, 36b) zumindest eine Spanneinheit (70a; 70b) umfasst, mittels derer eine auf das Flachelement (38a; 38b) einwirkbare Kraft der Unterdruckschalteinheit (30a, 32a, 34a, 36a; 30b, 32b, 34b, 36b) zu einer Spannung des Flachelements (38a; 38b) einstellbar ist.

12. Transportvorrichtung nach Anspruch 11, **dadurch gekennzeichnet, dass** die Spanneinheit (70a; 70b) zumindest ein Exzenterelement (72a; 72b) aufweist, mittels dessen eine Position eines Öffnungselements (62a; 62b) der Unterdruckschalteinheit (30a, 32a, 34a, 36a; 30b, 32b, 34b, 36b), das von dem Flachelement (38a; 38b) zumindest teilweise umschlungen wird, einstellbar ist.

13. Transportvorrichtung nach einem der vorhergehenden Ansprüche,
**dadurch gekennzeichnet, dass** die Vakuumeinheit (28a; 28b) eine Vielzahl an Unterdrucköffnung (40a, 42a, 44a; 40b, 42b, 44b) aufweist, die an der Führungseinheit (18a; 18b) angeordnet sind und mittels des Flachelements (38a; 38b) zumindest teilweise öffenbar und/oder schließbar sind.

14. Verfahren zu einem Transport von zumindest einem Produkt (12a; 12b), von zumindest einer Produktgruppe und/oder von zumindest einem Produktstapel mittels einer Transportvorrichtung nach einem der vorhergehenden Ansprüche, insbesondere zu einem Zuführen zu einem Verpackungsprozess einer Verpackungsmaschine (14a), **dadurch gekennzeichnet, dass** in zumindest einem Verfahrensschritt das Flachelement (38a; 38b) der Vakuumeinheit (28a; 28b) der Transportvorrichtung in Abhängigkeit von einer Position zumindest eines Förderelements (20a, 22a, 24a, 26a; 20b, 22b, 24b, 26b) der Fördereinheit (16a; 16b) der Transportvorrichtung mittels der Unterdruckschalteinheit (30a, 32a, 34a, 36a; 30b, 32b, 34b, 36b) der Vakuumeinheit (28a; 28b) bewegt wird, insbesondere zumindest teilweise von der Unterdrucköffnung (40a, 42a, 44a; 40b, 42b, 44b) der Vakuumeinheit (28a; 28b) abgehoben wird.

15. Verfahren nach Anspruch 14, **dadurch gekennzeichnet, dass** in zumindest einem Verfahrensschritt zumindest ein, insbesondere elektronisch ansteuerbares, Ventilelement (46a, 48a, 50a, 52a; 46b, 48b, 50b, 52b) der Unterdruckschalteinheit (30a, 32a, 34a, 36a; 30b, 32b, 34b, 36b) aktiviert wird, insbesondere infolge eines mittels eines mit dem Förderelement (20a, 22a, 24a, 26a; 20b, 22b, 24b, 26b) zusammenwirkenden Schleifrings übertragenen Signals oder infolge einer kabellosen Datenkommunikation.

## Claims

1. Transport device for a transport of at least one product (12a; 12b), of at least one product group and/or of at least one product stack, in particular for a feeding to a packaging process of a packaging machine (14a),
with at least one conveying unit (16a; 16b),
with at least one guiding unit (18a; 18b), which is in particular realized as a closed loop and on which a plurality of conveying elements (20a, 22a, 24a, 26a; 20b, 22b, 24b, 26b) are arranged which are drivable independently from one another in a manner regulated in terms of speed and/or position,
and with at least one vacuum unit (28a; 28b) for generating a negative pressure at the conveying elements (20a, 22a, 24a, 26a; 20b, 22b, 24b, 26b) for the purpose of holding at least one product (12a; 12b), at least one product group and/or at least one product stack at the conveying elements (20a, 22a, 24a, 26a; 20b, 22b, 24b, 26b), the vacuum unit (28a; 28b) comprising at least one negative-pressure switching unit (30a, 32a, 34a, 36a; 30b, 32b, 34b, 36b) for switching a generation of negative pressure on at least one of the conveying elements (20a, 22a, 24a, 26a; 20b, 22b, 24b, 26b),
wherein the negative-pressure switching unit (30a, 32a, 34a, 36a; 30b, 32b, 34b, 36b) is arranged at the at least one of the conveying elements (20a, 22a, 24a, 26a; 20b, 22b, 24b, 26b) and is movable along the guiding unit (18a; 18b) together with the at least one conveying element (20a, 22a, 24a, 26a; 20b, 22b, 24b, 26b),
wherein the vacuum unit (28a; 28b) comprises at least one flat element (38a; 38b), in particular a flexible wrap-around element, which - at least for at least partially opening at least one negative-pressure opening (40a, 42a, 44a; 40b, 42b, 44b) of the vacuum unit (28a; 28b) - acts together with the negative-pressure switching unit (30a, 32a, 34a, 36a; 30b, 32b, 34b, 36b) depending on a position of the at least one conveying element (20a, 22a, 24a, 26a; 20b, 22b, 24b, 26b),
**characterised in that** the flat element (38a; 38b) at least partially wraps around the guiding unit (18a; 18b) in a region of the guiding unit (18a; 18b) in which the at least one negative-pressure opening (40a, 42a, 44a; 40b, 42b, 44b) is arranged on the guiding unit (18a; 18b).

2. Transport device according to claim 1,
**characterised in that** the negative-pressure switching unit (30a, 32a, 34a, 36a; 30b, 32b, 34b, 36b) comprises at least one, in particular electronically actuatable, valve element (46a, 48a, 50a, 52a; 46b, 48b, 50b, 52b), which is configured for opening and/or closing a supply opening (54a, 56a, 58a, 60a; 54b, 56b, 58b, 60b) of the vacuum unit (28a; 28b), which is arranged on the at least one conveying element (20a, 22a, 24a, 26a; 20b, 22b, 24b, 26b).

3. Transport device according to claim 1 or 2,
**characterised in that** the negative-pressure switching unit (30a, 32a, 34a, 36a; 30b, 32b, 34b, 36b) comprises at least one opening element (62a; 62b), which is at least partially wrapped around by the flat element (38a; 38b) and is configured, depending on a position of the at least one conveying element (20a, 22a, 24a, 26a; 20b, 22b, 24b, 26b), to lift the flat element (38a; 38b) at least partially from the at least one negative-pressure opening (40a, 42a, 44a; 40b, 42b, 44b).

4. Transport device according to claim 3,
**characterised in that** the opening element (62a; 62b) is realized as a rolling element, in particular as a pulley or as a roller.

5. Transport device according to claim 4,
**characterised in that** the opening element (62a; 62b) is realized in a domed fashion.

6. Transport device according to one of the preceding claims,
**characterised in that** the negative-pressure switching unit (30a, 32a, 34a, 36a; 30b, 32b, 34b, 36b) comprises at least one pressing element (64a, 66a; 64b, 66b), which is configured to press the flat element (38a; 38b) to the vacuum unit (28a; 28b) at least in a peripheral region of the at least one conveying element (20a, 22a, 24a, 26a; 20b, 22b, 24b, 26b), in particular in order to realize a sealing function.

7. Transport device according to claim 6,
**characterised in that** the pressing element (64a, 66a; 64b, 66b) is realized as a rolling element, in particular as a pulley or as a roller, which rolls on the flat element (38a; 38b).

8. Transport device according to claim 6 or 7,
**characterised in that** the pressing element (64a, 66a; 64b, 66b) is arranged on a side of the flat element (38a; 38b) that faces away from the at least one negative-pressure opening (40a, 42a, 44a; 40b, 42b, 44b) of the vacuum unit (28a; 28b).

9. Transport device according to one of the preceding claims,
**characterised in that** at least one opening element (62a; 62b) of the negative-pressure switching unit (30a, 32a, 34a, 36a; 30b, 32b, 34b, 36b), which acts together with the flat element (38a; 38b), and/or at least one pressing element (64a, 66a; 64b, 66b) of the negative-pressure switching unit (30a, 32a, 34a, 36a; 30b, 32b, 34b, 36b), which acts together with the flat element (38a; 38b), are/is arranged at least partially in a vacuum channel (68a; 68b) of the vacuum unit (28a; 28b) extending through the negative-pressure switching unit (30a, 32a, 34a, 36a; 30b, 32b, 34b, 36b).

10. Transport device according to one of the preceding claims,
**characterised in that** the negative-pressure switching unit (30a, 32a, 34a, 36a; 30b, 32b, 34b, 36b) is configured to guide the flat element (38a; 38b) in a meander-like fashion at least in a region of the flat element (38a; 38b) which is covered by the negative-pressure switching unit (30a, 32a, 34a, 36a; 30b, 32b, 34b, 36b).

11. Transport device according to one of the preceding claims,
**characterised in that** the negative-pressure switching unit (30a, 32a, 34a, 36a; 30b, 32b, 34b, 36b) comprises at least one tensioning unit (70a; 70b), by means of which a force of the negative-pressure switching unit (30a, 32a, 34a, 36a; 30b, 32b, 34b, 36b) acting onto the flat element (38a; 38b) can be adjusted for a tensioning of the flat element (38a; 38b).

12. Transport device according to claim 11,
**characterised in that** the tensioning unit (70a; 70b) comprises at least one eccentric element (72a; 72b), by means of which a position of an opening element (62a; 62b) of the negative-pressure switching unit (30a, 32a, 34a, 36a; 30b, 32b, 34b, 36b), which is at least partially wrapped around by the flat element (38a; 38b) can be adjusted.

13. Transport device according to one of the preceding claims,
**characterised in that** the vacuum unit (28a; 28b) comprises a plurality of negative-pressure openings (40a, 42a, 44a; 40b, 42b, 44b), which are arranged on the guiding unit (18a; 18b) and can be at least partially opened and/or closed by means of the flat element (38a; 38b).

14. Method for a transport of at least one product (12a; 12b), of at least one product group and/or of at least one product stack by means of a transport device according to one of the preceding claims, in particular for a feeding to a packaging process of a packaging machine (14a),
**characterised in that** in at least one method step the flat element (38a; 38b) of the vacuum unit (28a; 28b) of the transport device is moved, depending on a position of at least one conveying element (20a, 22a, 24a, 26a; 20b, 22b, 24b, 26b) of the conveying unit (16a; 16b) of the transport device, by means of the negative-pressure switching unit (30a, 32a, 34a, 36a; 30b, 32b, 34b, 36b) of the vacuum unit (28a; 28b), and is in particular at least partially lifted from the negative-pressure opening (40a, 42a, 44a; 40b, 42b, 44b) of the vacuum unit (28a; 28b).

15. Method according to claim 14,
**characterised in that** in at least one method step at least one, in particular electronically actuatable, valve element (46a, 48a, 50a, 52a; 46b, 48b, 50b, 52b) of the negative-pressure switching unit (30a, 32a, 34a, 36a; 30b, 32b, 34b, 36b) is activated, in particular due to a signal transmitted by means of a slip ring acting together with the conveying element (20a, 22a, 24a, 26a; 20b, 22b, 24b, 26b) and/or due to a wireless data communication.

## Revendications

1. Dispositif de transport pour le transport d'au moins un produit (12a ; 12b), d'au moins un groupe de produits et/ou d'au moins une pile de produits, en particulier pour l'alimentation vers un procès d'emballage d'une machine d'emballage (14a), avec au moins une unité de transport (16a ; 16b),
avec au moins une unité de guidage (18a ; 18b), qui est en particulier réalisée comme boucle fermée et sur laquelle est disposée une pluralité d'éléments de transport (20a, 22a, 24a, 26a ; 20b, 22b, 24b, 26b) de l'unité de transport (16a ; 16b) qui sont entraînables indépendamment les uns des autres de manière régulée en vélocité et/ou en position,
et avec au moins une unité de vacuum (28a ; 28b) pour créer une dépression aux éléments de transport (20a, 22a, 24a, 26a ; 20b, 22b, 24b, 26b) pour retenir au moins un produit (12a ; 12b), au moins un groupe de produits et/ou au moins une pile de produits sur les éléments de transport (20a, 22a, 24a, 26a ; 20b, 22b, 24b, 26b), ladite unité de vacuum (28a ; 28b) comprenant au moins une unité activatrice-dépression (30a, 32a, 34a, 36a ; 30b, 32b, 34b, 36b) pour activer une génération de dépression à au moins un des éléments de transport (20a, 22a, 24a, 26a ; 20b, 22b, 24b, 26b),
où l'unité activatrice-dépression (30a, 32a, 34a, 36a ; 30b, 32b, 34b, 36b) est disposée sur l'au moins un des éléments de transport (20a, 22a, 24a, 26a ; 20b, 22b, 24b, 26b) et peut être mue conjointement avec l'au moins un élément de transport (20a, 22a, 24a, 26a ; 20b, 22b, 24b, 26b) le long de l'unité de guidage (18a ; 18b),
où l'unité de vacuum (28a ; 28b) comprend au moins un élément plat (38a ; 38b), en particulier un élément flexible d'enlacement, qui coopère avec l'unité activatrice-dépression (30a, 32a, 34a, 36a ; 30b, 32b, 34b, 36b), en fonction d'une position de l'au moins un élément de transport (20a, 22a, 24a, 26a ; 20b, 22b, 24b, 26b), au moins pour au moins partiellement ouvrir au moins une ouverture-dépression (40a, 42a, 44a ; 40b, 42b, 44b) de l'unité de vacuum (28a ; 28b),
**caractérisé en ce que** l'élément plat (38a ; 38b) enlace l'unité de guidage (18a ; 18b) au moins partiellement dans une zone de l'unité de guidage (18a ; 18b) dans laquelle l'au moins une ouverture-dépression (40a, 42a, 44a ; 40b, 42b, 44b) est disposée sur l'unité de guidage (18a ; 18b).

2. Dispositif de transport selon la revendication 1,
**caractérisé en ce que** l'unité activatrice-dépression (30a, 32a, 34a, 36a ; 30b, 32b, 34b, 36b) comporte au moins un élément-soupape (46a, 48a, 50a, 52a ; 46b, 48b, 50b, 52b), qui peut en particulier être actionné électroniquement, et qui est conçu pour ouvrir et/ou fermer une ouverture d'approvisionnement (54a, 56a, 58a, 60a ; 54b, 56b, 58b, 60b) de l'unité de vacuum (28a ; 28b) qui est disposée à l'au moins un élément de transport (20a, 22a, 24a, 26a ; 20b, 22b, 24b, 26b).

3. Dispositif de transport selon la revendication 1 ou 2,
**caractérisé en ce que** l'unité activatrice-dépression (30a, 32a, 34a, 36a ; 30b, 32b, 34b, 36b) comporte au moins un élément d'ouverture (62a ; 62b) qui est au moins partiellement enlacé de l'élément plat (38a ; 38b) et est conçu, en fonction d'une position de l'au moins un élément de transport (20a, 22a, 24a, 26a ; 20b, 22b, 24b, 26b), pour au moins partiellement soulever l'élément plat (38a ; 38b) de l'au moins une ouverture-dépression (40a, 42a, 44a ; 40b, 42b, 44b).

4. Dispositif de transport selon la revendication 3,
**caractérisé en ce que** l'élément d'ouverture (62a ; 62b) est réalisé comme élément roulant, en particulier comme poulie ou comme rouleau.

5. Dispositif de transport selon la revendication 4,
**caractérisé en ce que** l'élément d'ouverture (62a ; 62b) est réalisé en forme bombée.

6. Dispositif de transport selon l'une des revendications précédentes,
**caractérisé en ce que** l'unité activatrice-dépression (30a, 32a, 34a, 36a ; 30b, 32b, 34b, 36b) comprend au moins un élément de pression (64a, 66a ; 64b, 66b) qui est conçu pour presser l'élément plat (38a ; 38b) sur l'unité de vacuum (28a ; 28b) au moins dans une zone périphérique de l'au moins un élément de transport (20a, 22a, 24a, 26a ; 20b, 22b, 24b, 26b), en particulier pour réaliser une fonction de scellage.

7. Dispositif de transport selon la revendication 6,
**caractérisé en ce que** l'élément de pression (64a, 66a ; 64b, 66b) est réalisé comme élément roulant, en particulier comme poulie ou comme rouleau, qui roule sur l'élément plat (38a ; 38b).

8. Dispositif de transport selon la revendication 6 ou 7,
**caractérisé en ce que** l'élément de pression (64a, 66a ; 64b, 66b) est disposé sur une face de l'élément plat (38a ; 38b) détournée de l'au moins une ouverture-dépression (40a, 42a, 44a ; 40b, 42b, 44b) de l'unité de vacuum (28a ; 28b).

9. Dispositif de transport selon l'une des revendications précédentes,
**caractérisé en ce qu'**au moins un élément d'ouverture (62a ; 62b) de l'unité activatrice-dépression (30a, 32a, 34a, 36a ; 30b, 32b, 34b, 36b), qui coopère avec l'élément plat (38a ; 38b), et/ou au moins un élément de pression (64a, 66a ; 64b, 66b) de l'unité activatrice-dépression (30a, 32a, 34a, 36a ; 30b, 32b, 34b, 36b), qui coopère avec l'élément plat (38a ; 38b), sont/est disposé/s au moins partiellement dans un canal de vacuum (68a ; 68b) de l'unité de vacuum (28a ; 28b) s'étendant à travers l'unité activatrice-dépression (30a, 32a, 34a, 36a ; 30b, 32b, 34b, 36b).

10. Dispositif de transport selon l'une des revendications précédentes,
**caractérisé en ce que** l'unité activatrice-dépression (30a, 32a, 34a, 36a ; 30b, 32b, 34b, 36b) est conçue pour guider l'élément plat (38a ; 38b) en forme de méandre au moins dans une zone de l'élément plat (38a ; 38b) couverte de l'unité activatrice-dépression (30a, 32a, 34a, 36a ; 30b, 32b, 34b, 36b).

11. Dispositif de transport selon l'une des revendications précédentes,
**caractérisé en ce que** l'unité activatrice-dépression (30a, 32a, 34a, 36a ; 30b, 32b, 34b, 36b) comprend au moins une unité de tension (70a ; 70b) par le biais de laquelle une force de l'unité activatrice-dépression (30a, 32a, 34a, 36a ; 30b, 32b, 34b, 36b) qui agit sur l'élément plat (38a ; 38b) peut être réglée pour tensionner l'élément plat (38a ; 38b).

12. Dispositif de transport selon la revendication 11,
**caractérisé en ce que** l'unité de tension (70a ; 70b) comporte au moins un élément-excentrique (72a ; 72b) par le biais duquel une position d'un élément d'ouverture (62a ; 62b) de l'unité activatrice-dépression (30a, 32a, 34a, 36a ; 30b, 32b, 34b, 36b), qui est au moins partiellement enlacé de l'élément plat (38a ; 38b), peut être réglée.

13. Dispositif de transport selon l'une des revendications précédentes,
**caractérisé en ce que** l'unité de vacuum (28a ; 28b) comprend une pluralité d'ouvertures-dépression (40a, 42a, 44a ; 40b, 42b, 44b) qui sont disposées sur l'unité de guidage (18a ; 18b) et qui peuvent être au moins partiellement ouvertes et/ou fermées moyennant l'élément plat (38a ; 38b).

14. Procédé pour le transport d'au moins un produit (12a ; 12b), d'au moins un groupe de produits et/ou d'au moins une pile de produits moyennant un dispositif de transport selon l'une des revendications précédentes, en particulier pour l'alimentation vers un procès d'emballage d'une machine d'emballage (14a), **caractérisé en ce que** dans au moins une étape de procédé l'élément plat (38a ; 38b) de l'unité de vacuum (28a ; 28b) du dispositif de transport est mu, moyennant l'unité activatrice-dépression (30a, 32a, 34a, 36a ; 30b, 32b, 34b, 36b) de l'unité de vacuum (28a ; 28b), en fonction d'une position d'au moins un élément de transport (20a, 22a, 24a, 26a ; 20b, 22b, 24b, 26b) de l'unité de transport (16a ; 16b) du dispositif de transport,
où l'élément plat (38a ; 38b) est en particulier au moins partiellement soulevé de l'ouverture-dépression (40a, 42a, 44a ; 40b, 42b, 44b) de l'unité de vacuum (28a; 28b).

15. Procédé selon la revendication 14,
**caractérisé en ce que** dans au moins une étape de procédé au moins un élément-soupape (46a, 48a, 50a, 52a ; 46b, 48b, 50b, 52b) de l'unité activatrice-dépression (30a, 32a, 34a, 36a ; 30b, 32b, 34b, 36b), qui peut en particulier être actionné électroniquement, est activé, en particulier à la suite d'un signal transmis moyennant une bague collectrice coopérant avec l'élément de transport (20a, 22a, 24a, 26a ; 20b, 22b, 24b, 26b) ou à la suite d'une communication de données sans fil.
